# EUROPEAN PATENT SPECIFICATION

(11) **EP 3 285 455 B1**
(45) Date of publication and mention of the grant of the patent: **04.12.2019**
(21) Application number: 16810966.8
(22) Date of filing: 13.06.2016
(51) Int. Cl.: H04L 29/06, H04N 21/845, H04N 21/234, H04N 21/262, H04L 29/08

(54) **CONTENT ITEM AGGREGATION METHOD AND RELATED DEVICE AND COMMUNICATION SYSTEM**
INHALTSELEMENTAGGREGATIONSVERFAHREN UND ZUGEHÖRIGE VORRICHTUNG UND KOMMUNIKATIONSSYSTEM
PROCÉDÉ D'AGRÉGATION D'ÉLÉMENT DE CONTENU AINSI QUE DISPOSITIF ASSOCIÉ ET SYSTÈME DE COMMUNICATION

(30) Priority: 16.06.2015 CN 201510334315
(43) Date of publication of application: 21.02.2018
(73) Proprietor: Huawei Technologies Co., Ltd., Longgang District Shenzhen, Guangdong 518129 (CN)
(72) Inventor: ZHANG, Shaobo, Shenzhen Guangdong 518129 (CN); WANG, Xin, Shenzhen Guangdong 518129 (CN)
(74) Representative: Isarpatent
(86) International application number: PCT/CN2016/085590
(87) International publication number: WO 2016/202225

(56) References cited:
- CN-A- 102 714 662
- CN-A- 104 935 595
- US-A1- 2011 145 430
- US-A1- 2012 023 253
- US-A1- 2014 137 171
- US-A1- 2015 019 629

## Description

### TECHNICAL FIELD

The present invention relates to the field of network communications technologies, and specifically, to a content item aggregation method, a related apparatus, and a communications system.

### BACKGROUND

Hypertext Transfer Protocol (HTTP)-based media streaming multimedia services are developing increasingly, and even posing a challenge to a position of conventional broadcast television. HTTP-based media streaming services do not support media content aggregation (for example, a cross-channel continuous-play service) yet. This is indeed a disadvantage.

US20110145430A1 discloses a method and apparatus for reproducing media data are provided. The method includes: receiving a first file including information about a period of first content and information about a period of second content; receiving and reproducing media data of the first content based on the received first file; stopping reproducing of the media data of the first content and receiving and reproducing media data of the second content based on the first file; and receiving and reproducing the media data of the first content when the reproducing the media data of the second content is completed, wherein the information about the period of the second content includes location information about the second media data of the second content or location information of a second file including the location information about the second media data of the second content.

US20150019629A1 discloses a method of dereferencing by a client in a network implementing Dynamic Adaptive Streaming over Hypertext Transfer Protocol (HTTP) (DASH), the method comprising receiving a first period of streaming content containing a message instructing the client to retrieve an updated media presentation description (MPD) and containing an indicator indicating a location from which the client is to retrieve the updated MPD, retrieving the updated MPD, and dereferencing a link in the updated MPD, wherein the link indicates a location of content to be streamed in a second period of streaming content described in the updated MPD, and wherein the client performs the dereferencing at a time before an end of the first period of streaming content that is twice a length of a minimum buffer time.

US20140137171A1 discloses A method and an apparatus for supporting time shift playback in an adaptive Hypertext Transfer Protocol (HTTP) streaming transmission solution are disclosed. The method includes: sending a live media presentation description (MPD) request message to a media server; receiving a response message that includes MPD for a current time period, where the MPD further includes media presentation information for another time period; determining that a moment of a media segment to be requested currently exceeds a time range corresponding to the MPD; acquiring the corresponding MPD according to the media presentation information corresponding to the media segment, and requesting, according to the acquired corresponding MPD.

### SUMMARY

Embodiments of the present invention provide a content item aggregation method, a related apparatus, and a communications system to implement flexible aggregation of media content. The scope of the invention is defined by the claims.

An embodiment of the present invention provides a content item aggregation method, including:
generating, by a serving end, a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation and the second media presentation are different media presentations; and
storing or sending the media presentation description.

An embodiment of the present invention further provides a content item aggregation method, including:
obtaining, by a client, a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation and the second media presentation are different media presentations; and
obtaining, by the client, the content item according to the description of the content item; and playing, by the client, the content item.

An embodiment of the present invention further provides a serving end, including:
a generation unit, configured to generate a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation and the second media presentation are different media presentations; and
a processing unit, configured to store or send the media presentation description.

An embodiment of the present invention further provides a client, including:
a first obtaining unit, configured to obtain a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation and the second media presentation are different media presentations;
a second obtaining unit, configured to obtain the content item according to the description of the content item; and
a play unit, configured to play the content item.

An embodiment of the present invention further provides a serving end, including a processor and a memory, where the client may further include a network interface.

The memory is configured to store an instruction, the processor is configured to execute the instruction, and the network interface is configured to communicate with another device under control of the processor.

For example, the processor is configured to: generate a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation and the second media presentation are different media presentations; and store or send the media presentation description.

An embodiment of the present invention further provides a client, including a processor and a memory, where the client may further include a network interface.

The memory is configured to store an instruction, the processor is configured to execute the instruction, and the network interface is configured to communicate with another device under control of the processor.

For example, the processor is configured to: obtain a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation and the second media presentation are different media presentations; obtain the content item according to the description of the content item; and play the content item.

In some possible implementations, the description of the content item is further used to indicate that the second media presentation is a real-time media presentation or a non-real-time media presentation.

In some possible implementations, in a second possible implementation of the fourth aspect, the description of the content item is further used to indicate a time position of the content item embedded in the first media presentation.

In some possible implementations, the description of the content item is further used to indicate that a part or an entirety of the content item is embedded in the first media presentation.

In some possible implementations, when the description of the content item is further used to indicate that a part of the content item is embedded in the first media presentation, the description of the content item is further used to indicate a start play time position and/or an end play time position of the part of the content item.

In some possible implementations, the description of the content item includes an offset indication fz, and the offset indication fz is used to indicate an offset between a start play time position and a start content time position of the content item.

In some possible implementations, when the second media presentation is a real-time media presentation, and the offset indicated by the offset indication fz is equal to 0, it indicates that the content item starts to be played from a content position corresponding to a current time; or when the second media presentation is a real-time media presentation, and the offset indicated by the offset indication fz is not equal to 0, it indicates that the content item starts to be played from a content position corresponding to a current time that is set back by the offset; or when the second media presentation is a real-time media presentation, and the offset indicated by the offset indication fz is not equal to 0, it indicates that the content item starts to be played from a content position corresponding to the start content position of the content item that is backward offset by the offset.

In some possible implementations, when the second media presentation is a non-real-time media presentation, and the offset indicated by the offset indication fz is equal to 0, it indicates that the content item starts to be played from the start content position of the content item; or when the second media presentation is a non-real-time media presentation, and the offset indicated by the offset indication fz is not equal to 0, it indicates that the content item starts to be played from a content position corresponding to the start content position of the content item that is backward offset by the offset.

In some possible implementations, the description of the content item is included in an aggregation method descriptor of the media presentation description, or the pointing information about the description of the content item is included in an aggregation method descriptor of the media presentation description.

In some possible implementations, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the content item is included in the first media presentation description element or the pointing information about the description of the content item is included in the first media presentation description element.

In some possible implementations, the aggregate media presentation description further includes a time window indication corresponding to the first media presentation description element, the time window indication is used to instruct a client to obtain updated content of the aggregate media presentation description from the serving end in a time window indicated by the time window indication, and the updated content includes the first media presentation description element.

In some possible implementations, the content item is a content paragraph or a media representation or an adaptation set.

The present invention further provides a communications system, including any client provided by an embodiment of the present invention and any serving end provided by an embodiment of the present invention.

In addition, an embodiment of the present invention further provides a computer readable storage medium, where the computer readable storage medium stores program code executed by a serving end and used for content item aggregation. The program code includes an instruction used to perform a method performed by the serving end.

In addition, an embodiment of the present invention further provides a computer readable storage medium, where the computer readable storage medium stores program code executed by a client and used for content item aggregation. The program code includes an instruction used to perform a method performed by the client.

As can be learned, in the technical solutions of the embodiments, a content item included in a media presentation may come from another media presentation different from the media presentation. That is, some or all content items of several other media presentations may be re-aggregated and arranged to form a new media presentation meeting a specific arrangement requirement, and a media presentation description of the new media presentation includes descriptions of the aggregated content items of the other media presentations, so that a client may obtain and play corresponding content items based on this, and the like. In summary, the technical solutions of the embodiments help implement flexible aggregation of media content.

### BRIEF DESCRIPTION OF DRAWINGS

To describe the technical solutions of the embodiments of the present invention or the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic structural diagram of DASH according to an embodiment of the present invention;
FIG. 2 is a schematic flowchart of a content item aggregation method according to an embodiment of the present invention;
FIG. 3 is a schematic flowchart of another content item aggregation method according to an embodiment of the present invention;
FIG. 4-a is a schematic diagram of a network architecture according to an embodiment of the present invention;

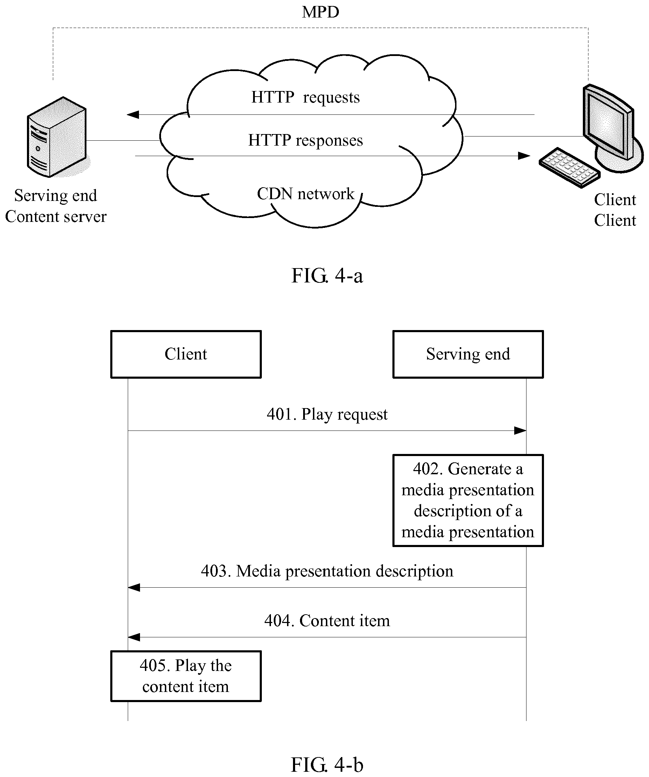

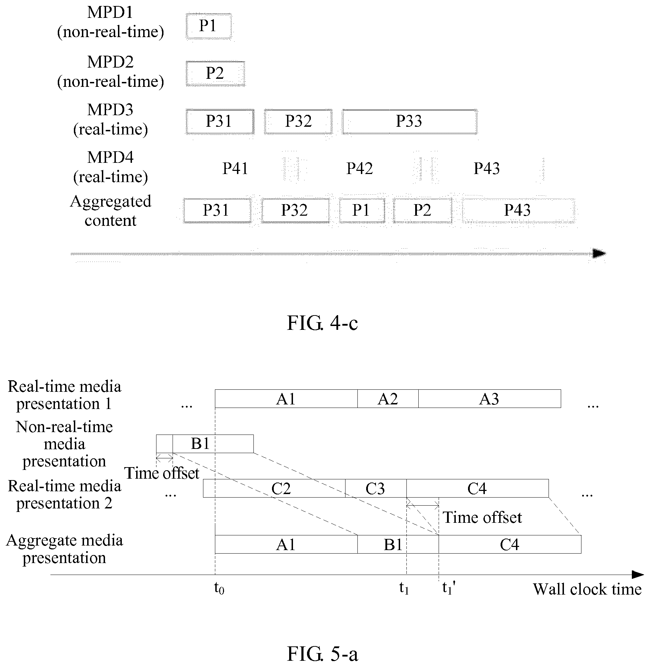

FIG. 4-b is a schematic flowchart of another content item aggregation method according to an embodiment of the present invention;
FIG. 4-c is a schematic diagram of aggregated content items of different media presentations according to an embodiment of the present invention;

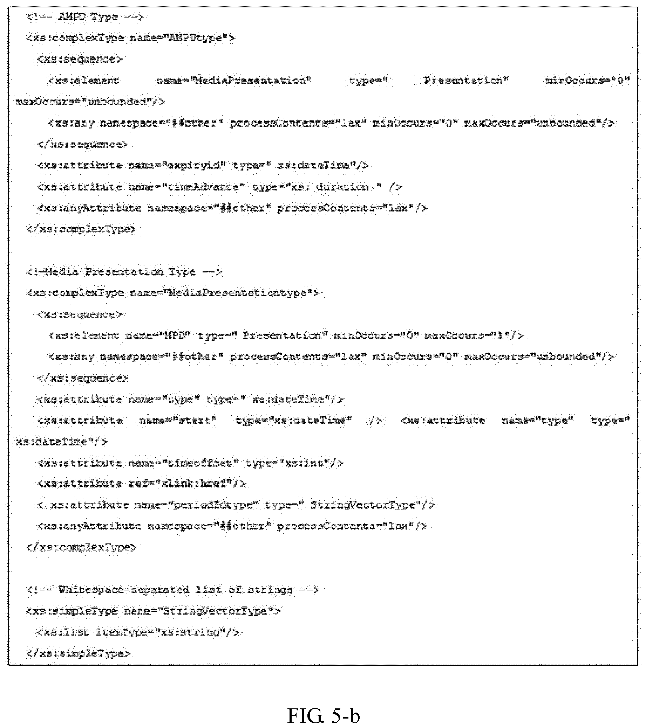

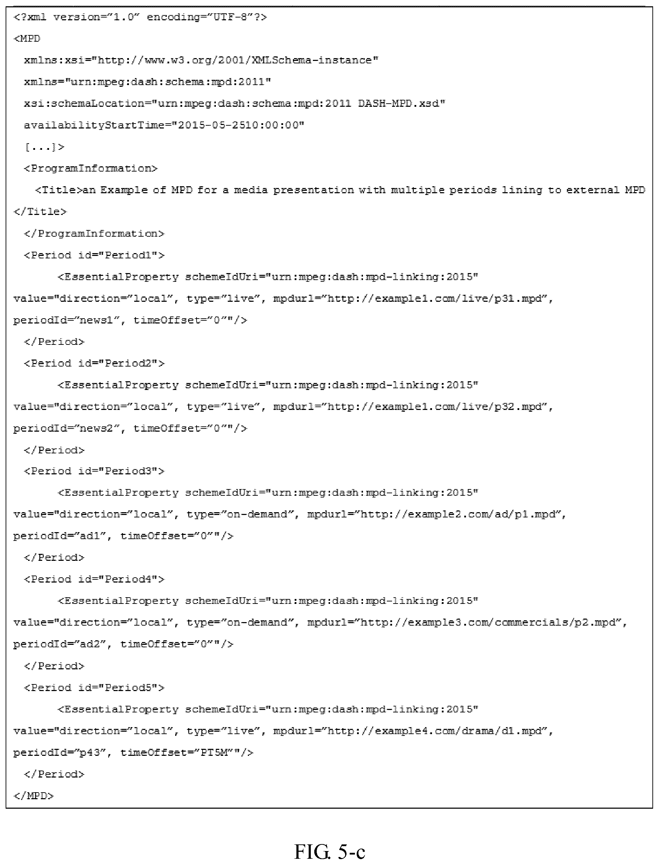

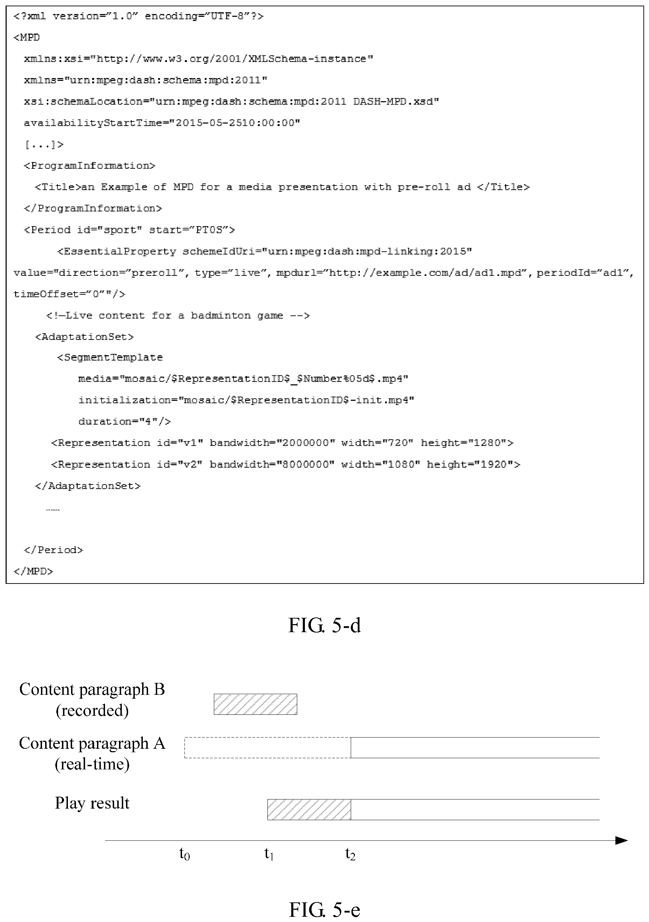

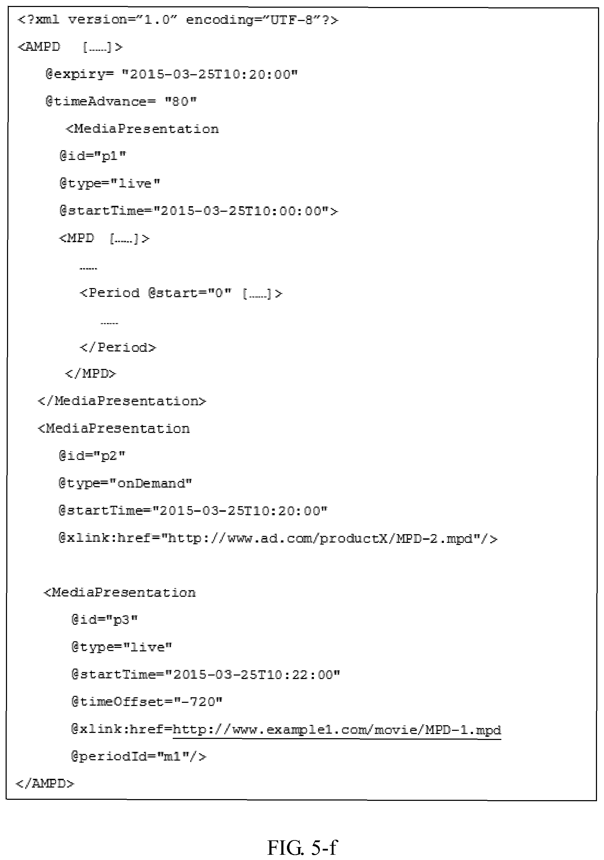

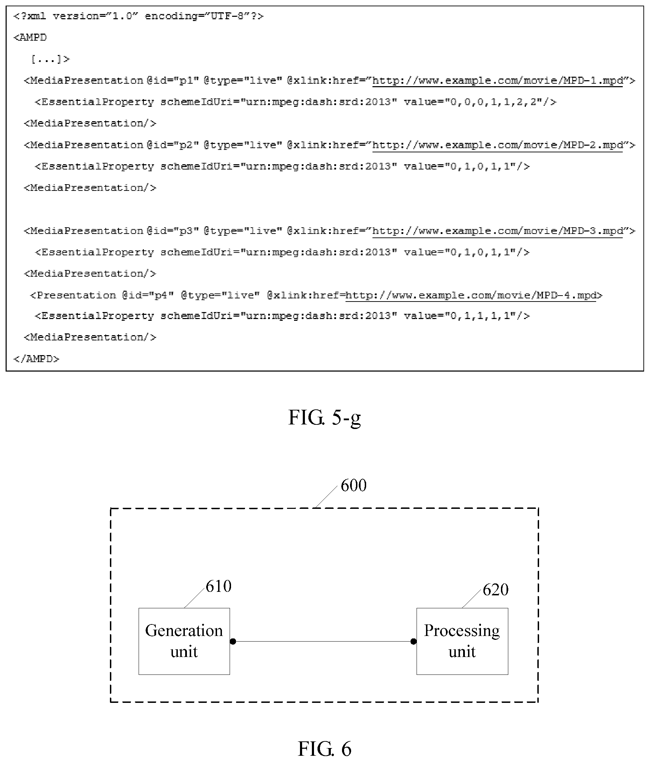

FIG. 5-a is a schematic diagram of a time arrangement of aggregated content items according to an embodiment of the present invention;
FIG. 5-b is a schematic diagram of a data structure of an AMPD described by using an XML data rule according to an embodiment of the present invention;
FIG. 5-c is a schematic diagram of a data structure of another MPD described by using an XML data rule according to an embodiment of the present invention;
FIG. 5-d is a schematic diagram of a data structure of another MPD described by using an XML data rule according to an embodiment of the present invention;
FIG. 5-e is a schematic diagram of another time relationship between content items according to an embodiment of the present invention;
FIG. 5-f is a schematic diagram of a data structure of another AMPD described by using an XML data rule according to an embodiment of the present invention;
FIG. 5-g is a schematic diagram of a data structure of another AMPD described by using an XML data rule according to an embodiment of the present invention;
FIG. 6 is a schematic diagram of a serving end according to an embodiment of the present invention;

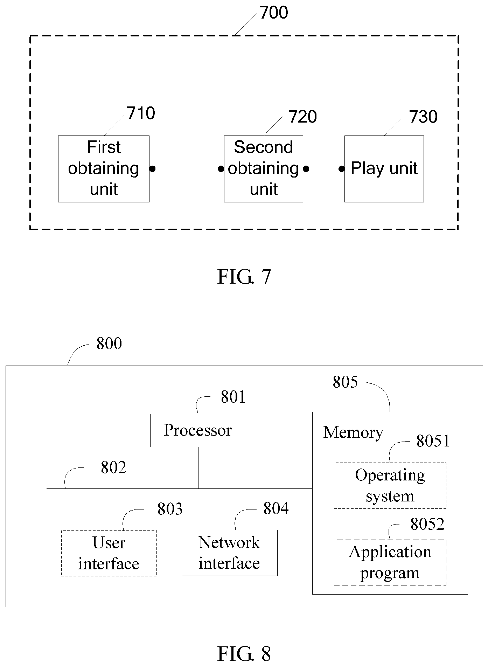

FIG. 7 is a schematic diagram of a client according to an embodiment of the present invention;
FIG. 8 is a schematic diagram of another client according to an embodiment of the present invention; and

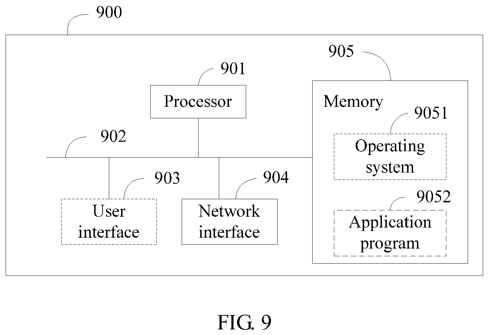

FIG. 9 is a schematic diagram of another client according to an embodiment of the present invention.

### DESCRIPTION OF EMBODIMENTS

Embodiments of the present invention provide a content item aggregation method, a related apparatus, and a communications system to implement flexible aggregation of media content.

To make persons skilled in the art understand the technical solutions of the present invention better, the following clearly and completely describes the technical solutions of the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The embodiments are hereinafter described in detail separately.

In the specification, claims, and accompanying drawings of the present invention, the terms "include", "have" and any variant thereof are intended to cover a non-exclusive inclusion. For example, a process, a method, a system, a product, or a device that includes a series of steps or units is not limited to the listed steps or units, but optionally further includes steps or units that are not listed, or optionally further includes other steps or units that are inherent to the process, method, system, product, or device. The terms "first", "second", "third", and the like are intended to distinguish between different objects but are not intended to describe a specific order.

Broadcast is a conventional media content transmission mode. Both a broadcasting station and a television station implement audio/video transmission by means of wireless broadcast. Cable television uses a cable to carry a broadcast signal. However, with development of technologies, and especially a broadband technology and a microprocessor technology, currently, multimedia transmission using an online media streaming service of the Internet is increasingly popular, where the broadband technology improves a level of a communication service, and the microprocessor technology enhances a capability of a personal device. In comparison with a conventional media broadcast service, the online media streaming service better satisfies different requirements of people for media content. A user may make an on-demand choice on obtained media content when necessary. This changes a unidirectional and passive receiving mode of the user.

An adaptive streaming service based on HTTP (DASH) is a mainstream technology of a multimedia streaming service, and represents latest development of the field. For example, a smooth streaming (SS) service of Microsoft Corporation, dynamic adaptive streaming over HTTP (DASH) of the Moving Picture Experts Group (MPEG), and an HTTP (HLS, HTTP Live Streaming) service of Apple Inc. are all different forms of the technology. A DASH standard of the MPEG is a standardization technology developed by the MPEG, and expects to be widely used to change a segmented market pattern.

A conventional DASH specification defines a media segment and a format of a media presentation description. The media presentation description may also be referred to as a format of a media presentation description document. The media segment is an encapsulation form of a media presentation, and is used for storage and access of a media representation. The media presentation description is used to describe a media presentation. The media presentation is a segment of media content in a time sequence. A media presentation may be equivalent to a television program or a television program channel. In comparison with a television service with multiple program channels, DASH can describe only one media presentation, but cannot simultaneously describe multiple parallel media presentations for selection by the user in a same way as a program channel guide in the television service presents multiple television channels simultaneously. Time arrangements of different media presentations are different, and are interleaved mutually. This time structure cannot be described in DASH. Therefore, conventional DASH cannot conveniently implement temporally parallel content aggregation.

For content aggregation in a time sequence, DASH is also insufficient. If DASH needs to generate a new media presentation description, there are n+1 media presentation descriptions. In addition, if there are other representation forms during content aggregation: different media presentations are rearranged in a time sequence to form a new media presentation - in a television program channel, different programs are arranged according to a time sequence, and a provider of the channel needs to splice program content. Although DASH can describe media content in a time sequence, if sources of media content are different, in a process of performing content aggregation, each media presentation description needs to be processed, and a description document of combined media presentations that undergo content aggregation is generated. In a combining process, the time of each media presentation needs to be processed, and consistent time descriptions are used. An error tends to occur in this process.

A basic concept of DASH is a media presentation. A media presentation may include one or more content paragraphs (Period). One content paragraph includes one piece of media content. The content paragraph is temporally continuous, and all aspects of the media content, for example, coding, language, and content protection, are consistent. The media content exists in a form of a coded media representation. Coded representations are grouped into an adaptation set according to an attribute, for example, a media component. The coded media representations in the adaptation set are different coded versions of a same media component of same media content, and may replace each other. Content paragraphs are temporally sequential. Different media content may be spliced temporally by using the content paragraphs. For example, a previous content paragraph is a news program, and a next content paragraph is an advertisement. A start of a content paragraph means a change of the content paragraph relative to a previous content paragraph in some aspects, for example, a change of content from a news program to a sports program, switching of video coding from H.264 to H.265, addition of a caption used as a media component, or addition of English dub. When a client encounters a start of a new content paragraph, the client needs to perform reconfiguration - selection of a media component, an adaptation range (bit rate of a coded media representation), initialization of a decoder, or the like. Content paragraphs are temporally sequential. When one content paragraph ends, a next content paragraph starts, and the two paragraphs do not temporally overlap. Therefore, DASH cannot describe multiple media presentations that are temporally parallel.

In addition, in conventional DASH, descriptions of spatial objects are supported. This is to adapt to different display capabilities of terminal devices or perform display scaling. However, due to a limitation of DASH, the spatial objects are different spatial parts of same media content. Therefore, this capability cannot be used to implement spatial aggregation of different media presentations. Particularly, conventional DASH is applicable only to one media presentation. Conventional DASH cannot describe multiple media presentations that are temporally parallel.

In DASH, a piece of media content is coded into multiple versions, and each version has different features, such as a bit rate. The versions are referred to as media representations in DASH. They represent the same media content, and may replace each other from a perspective of a content presentation (view/play). A media representation is temporally divided into accessible units, generally with a length of several seconds, and the units are referred to as media segments or media sub-segments (a media segment may be divided into media sub-segments logically). In addition, there is an initialization segment. The initialization segment includes only metadata, without coded media data. Hereinafter, both the media segment and the initialization segment are referred to as segments. The media representation is stored on a content server (for example, an HTTP server) for the client to obtain. The segment is a minimum unit that the client can access by using a URL.

A media presentation description (MPD) is an extensible markup language (XML) document. The MPD includes metadata required by the client, and describes a feature of a media representation and how to obtain the media representation from the server, including: a bit rate of the media representation, a resolution, a length-width ratio of a video picture, a uniform resource locator (URL) of a segment included in the media representation, and the like. Based on information in the MPD, the client constructs an HTTP URL to request a media segment in the media representation from the content server, and may switch to another media representation at a media segment boundary to adapt to a change of an available bandwidth.

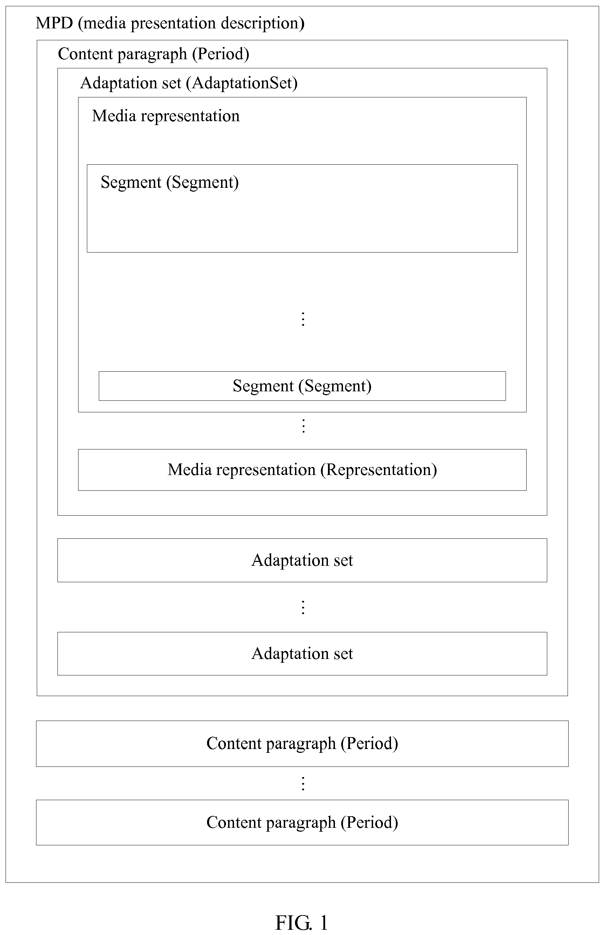

FIG. 1 shows an example of a DASH structure. The HTTP-based adaptive streaming media service allows a change of a content feature in a media presentation, for example, a change of a media coding mode. In DASH, this is implemented by using a "content paragraph (Period)" concept. A period is used for content splicing. For example, a previous content paragraph is a news program, and a next content paragraph is an advertisement.

The HTTP-based adaptive media streaming service allows a change of a content feature in a media presentation, for example, a change of a media coding mode. In the DASH standard, Period is used for content splicing. For example, a previous content paragraph is a news program, and a next content paragraph is an advertisement. A media presentation includes one or more content paragraphs (Period), and the content paragraphs are temporally sequential. A start of a content paragraph means a change relative to a previous content paragraph, for example: a change of content, for example, from a news program to a sports program, from a sports program to a movie program, from a movie program to an advertisement, or from an advertisement to a variety show; a change of a coding mode of content, for example, switching from an H.264 coding scheme to an H.265 coding scheme; a change of a quantity of media representations, for example, an increase or a decrease of media representations; or a change of a content component, for example, addition of a Chinese audio representation. When the client encounters a start of a new content paragraph, a working condition of the client changes, and re-initialization may be required.

In a content paragraph, a set of media representations including same media content and a same media component is referred to as an adaptation set. One adaptation set includes at least one media representation, and media representations in an adaptation set may replace each other. Different adaptation sets may be compatible or exclusive.

In summary, a media presentation may include one or more content paragraphs that are temporally sequential, and each content paragraph includes one or more adaptation sets (Adaptation Set). Each adaptation set includes one or more media representations (Representation). A media representation includes one or more segments .

A media presentation description may have a hierarchical structure similar to that of a media presentation. The media presentation concept described above may be represented by an XML element in a media presentation description. A media presentation element includes one or more content paragraph (Period) elements, and each content paragraph (Period) element includes one or more adaptation set elements. Each adaptation set element includes one or more media representation elements.

A media presentation corresponds to a media presentation description element in a media presentation description. One content paragraph in the media presentation corresponds to one content paragraph element in the media presentation description. One adaptation set in the media presentation corresponds to one adaptation set element in the media presentation description. One media representation in the media presentation corresponds to one media representation element in the media presentation description, and so on.

The foregoing describes some basic concepts of DASH briefly. The following describes in detail a specific implementation solution of an embodiment of the present invention.

An embodiment of the present invention provides a content item aggregation method, including: generating, by a serving end, a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation is different from the second media presentation; and storing or sending the media presentation description.

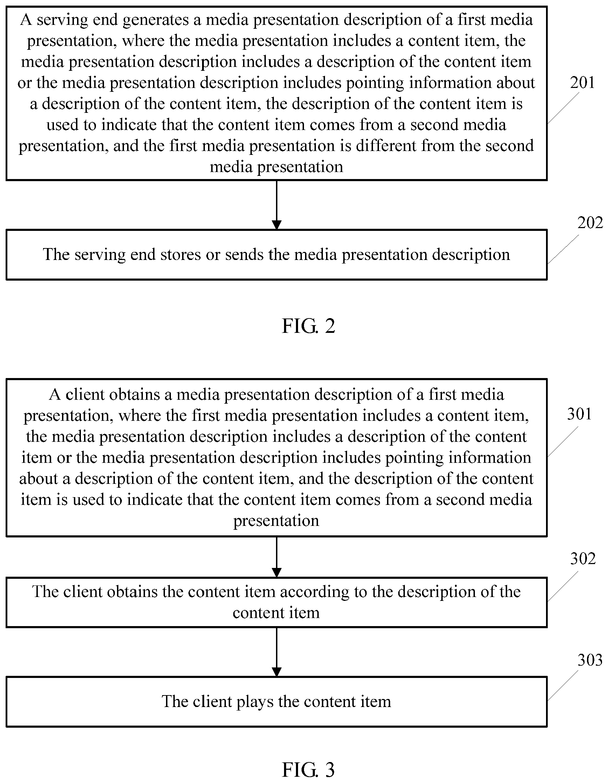

Referring to FIG. 2, FIG. 2 is a schematic flowchart of a content item aggregation method according to an embodiment of the present invention. As shown in FIG. 2, the content item aggregation method provided by this embodiment of the present invention may include the following steps.

201. A serving end generates a media presentation description of a first media presentation.

The first media presentation includes a content item (for ease of reference, the content item may be referred to as a first content item hereinafter). The media presentation description includes a description of the first content item or the media presentation description includes pointing information about a description of the first content item. The description of the first content item is used to indicate that the first content item comes from a second media presentation. The first media presentation and the second media presentation are different media presentations.

The first content item may be one of N content items included in the first media presentation, where N is an integer greater than 1 or equal to 1. For example, the first media presentation further includes a second content item (the first content item and the second content item are different content items), the media presentation description includes a description of the second content item or the media presentation description includes pointing information about a description of the second content item, and the description of the second content item is used to indicate that the second content item comes from the second media presentation or a media presentation X.

For example, N may be equal to 1, 2, 3, 4, 5, 6, 8, 10, 15, 19, 21, 30, 500, or another value.

It may be understood that, the pointing information about the description of the first content item is used to point to the description of the first content item. For example, the pointing information about the description of the first content item may include a pointer or a URL or the like of the description of the first content item. The description of the first content item may be obtained by using the pointing information about the description of the first content item.

Optionally, in some possible implementations of the present invention, the first content item may be, for example, a content paragraph (Period) or a media representation or an adaptation set or media content in another form.

Optionally, in some possible implementations of the present invention, the serving end generates the media presentation description of the first media presentation after receiving a program play request from a client. Certainly, the serving end may also generate the media presentation description of the first media presentation when triggered by another possible condition.

202. The serving end stores or sends the media presentation description of the first media presentation.

The serving end, for example, may send the media presentation description to the client. The client may further obtain the first content item according to the description of the first content item. The client may further play the first content item.

As can be learned, in the technical solution of this embodiment, the first content item included in the first media presentation may come from the second media presentation. That is, content items of other media presentations may be re-aggregated and arranged to form a new media presentation meeting a specific arrangement requirement, and a media presentation description of the new media presentation includes descriptions of the aggregated content items of the other media presentations, so that the client may obtain and play corresponding content items based on this, and the like. In summary, the technical solution of this embodiment helps implement flexible aggregation of media content.

Optionally, in some possible implementations of the present invention, the description of the first content item further includes a time indication Sd used to indicate a start play time of the first content item. For example, the time indication Sd may be an attribute @Start or an element @Start.

Optionally, in some possible implementations of the present invention, the description of the second content item further includes a time indication Se used to indicate a start play time of the second content item. The start play time of the second content item that is indicated by the time indication Se is equal to an end play time of the first content item, or the start play time of the second content item that is indicated by the time indication Se is later than an end play time of the first content item, and a time difference Δt between the start play time of the second content item and the end play time of the first content item is less than a threshold.

Optionally, in some possible implementations of the present invention, the description of the first content item is further used to indicate that the second media presentation is a real-time media presentation or a non-real-time media presentation.

The real-time media presentation, for example, is a live media presentation, for example, a live sports game or a live variety show. The non-real-time media presentation indicates that the media presentation already exists by recording beforehand or in another manner. The non-real-time media presentation, for example, may be a TV series, a movie, a sports game, or a variety show that is recorded beforehand.

Optionally, in some possible implementations of the present invention, the description of the first content item is further used to indicate a time position of the first content item embedded in the first media presentation. The time position of the first content item embedded in the first media presentation is a time position of the first content item arranged in the first media presentation.

Optionally, in some possible implementations of the present invention, the description of the first content item is further used to indicate that a part or an entirety of the first content item is embedded in the first media presentation. That is, the description of the first content item may be further used to indicate that the entirety of the first content item is embedded in the first media presentation, or the description of the first content item may be used to indicate that a part of the first content item is embedded in the first media presentation. "A part" of the first content item may be considered from different dimensions such as time and content. For example, assuming that the first content item is an AdaptationSet, if the description of the first content item indicates that a part of the first content item is embedded in the first media presentation, it may indicate that a part of versions of the AdaptationSet and/or a part of clipped media representations are embedded in the first media presentation. For example, the AdaptationSet includes media representations of five versions whose durations are all 15 minutes. For example, in one case, the description of the first content item may indicate that media representations of two versions whose durations are both 15 minutes among the media representations of the five versions are embedded in the first media presentation. For example, in another case, the description of the first content item may indicate that media representations of three versions whose durations are all 12 minutes (that is, 12-minute media representations clipped from 15-minute media representations) among the media representations of the five versions are embedded in the first media presentation. For example, in still another case, the description of the first content item may indicate that media representations of five versions whose durations are all 12 minutes (that is, 12-minute media representations clipped from 15-minute media representations) among the media representations of the five versions are embedded in the first media presentation.

Optionally, in some possible implementations of the present invention, when the description of the first content item is further used to indicate that a part of the first content item is embedded in the first media presentation, the description of the first content item may be further used to indicate a start play time position and/or an end play time position of the part of the first content item. For example, the description of the first content item may be further used to indicate that the start play time position of the part of the first content item is a start content time position of the first content item, or a content position after a start content time position of the first content item is offset by five minutes.

Optionally, in some possible implementations of the present invention, the description of the first content item includes an offset indication fz, and the offset indication fz is used to indicate an offset between a start play time position and a start content time position of the first content item.

Optionally, in some possible implementations of the present invention, when the second media presentation is a real-time media presentation, and the offset indicated by the offset indication fz is equal to 0, it indicates that the first content item starts to be played from a content position corresponding to a current time; or when the second media presentation is a real-time media presentation, and the offset indicated by the offset indication fz is not equal to 0, it indicates that the first content item starts to be played from a content position corresponding to a current time that is set back by the offset; or when the second media presentation is a real-time media presentation, and the offset indicated by the offset indication fz is not equal to 0, it indicates that the first content item starts to be played from a content position corresponding to the start content position of the first content item that is backward offset by the offset.

Optionally, in some possible implementations of the present invention, when the second media presentation is a non-real-time media presentation, and the offset indicated by the offset indication fz is equal to 0, it indicates that the first content item starts to be played from the start content position of the first content item; or when the second media presentation is a non-real-time media presentation, and the offset indicated by the offset indication fz is not equal to 0, it indicates that the first content item starts to be played from a content position corresponding to the start content position of the first content item that is backward offset by the offset.

Optionally, in some possible implementations of the present invention, the description of the first content item is included in an aggregation method descriptor of the media presentation description, or the pointing information about the description of the first content item is included in an aggregation method descriptor of the media presentation description.

Optionally, in some possible implementations of the present invention, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the first content item is included in the first media presentation description element or the pointing information about the description of the first content item is included in the first media presentation description element.

The first media presentation may be an aggregate media presentation or an ordinary media presentation. The media presentation description may be an aggregate media presentation description or an ordinary media presentation description.

Optionally, in some possible implementations of the present invention, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the first content item is included in the first media presentation description element or the pointing information about the description of the first content item is included in the first media presentation description element.

Optionally, in some possible implementations of the present invention, the aggregate media presentation description further includes a time window indication (the time window indication, for example, may include an attribute @expriy and an attribute @timeAdvance) corresponding to the first media presentation description element, the time window indication is used to instruct the client to obtain updated content of the aggregate media presentation description from the serving end in a time window indicated by the time window indication, and the updated content includes the first media presentation description element. Because the time window indication is introduced to limit a time period of updating the aggregate media presentation description by the client, this helps better control content playing of the client.

An embodiment of the present invention provides a content item aggregation method, including: obtaining, by a client, a media presentation description of a first media presentation, where the first media presentation includes a first content item, the media presentation description includes a description of the first content item or the media presentation description includes pointing information about a description of the first content item, the description of the first content item is used to indicate that the first content item comes from a second media presentation; obtaining, by the client, the first content item according to the description of the first content item; and playing, by the client, the first content item.

Referring to FIG. 3, FIG. 3 is a schematic flowchart of a content item aggregation method according to an embodiment of the present invention. As shown in FIG. 3, the content item aggregation method provided by this embodiment of the present invention may include the following steps.

301. A client obtains a media presentation description of a first media presentation.

The first media presentation includes a content item (for ease of reference, the content item may be referred to as a first content item hereinafter). The media presentation description includes a description of the first content item or the media presentation description includes pointing information about a description of the first content item. The description of the first content item is used to indicate that the first content item comes from a second media presentation. The first media presentation and the second media presentation are different media presentations.

The first content item is one of N content items included in the first media presentation, where N is an integer greater than 1 or equal to 1. For example, the first media presentation further includes a second content item (the second content item is different from the first content item), the media presentation description includes a description of the second content item or the media presentation description includes pointing information about a description of the second content item, and the description of the second content item is used to indicate that the second content item comes from the second media presentation or a media presentation X.

It may be understood that, the pointing information about the description of the first content item is used to point to the description of the first content item. For example, the pointing information about the description of the first content item may include a pointer or a URL or the like of the description of the first content item. The description of the first content item may be obtained by using the pointing information about the description of the first content item.

Optionally, in some possible implementations of the present invention, the content item (for example, the first content item or the second content item), for example, may be a content paragraph (Period) or a media representation or an adaptation set or media content in another form.

For example, N may be equal to 1, 2, 3, 4, 5, 6, 8, 10, 15, 19, 21, 30, 500, or another value.

Optionally, in some possible implementations of the present invention, a serving end generates the media presentation description of the first media presentation after receiving a program play request from the client. Certainly, the serving end may also generate the media presentation description of the first media presentation when triggered by another possible condition.

302. The client obtains the first content item according to the description of the first content item.

303. The client plays the first content item.

As can be learned, in the technical solution of this embodiment, the first content item included in the first media presentation may come from the second media presentation. That is, content items of other media presentations may be re-aggregated and arranged to form a new media presentation meeting a specific arrangement requirement, and a media presentation description of the new media presentation includes descriptions of the aggregated content items of the other media presentations, so that the client may obtain and play corresponding content items based on this, and the like. In summary, the technical solution of this embodiment helps implement flexible aggregation of media content.

Optionally, in some possible implementations of the present invention, the description of the first content item is further used to indicate that the second media presentation is a real-time media presentation or a non-real-time media presentation.

The real-time media presentation, for example, is a live media presentation, for example, a live sports game or a live variety show. The non-real-time media presentation indicates that the media presentation already exists by recording beforehand or in another manner. The non-real-time media presentation, for example, may be a TV series, a movie, a sports game, or a variety show that is recorded beforehand.

Optionally, in some possible implementations of the present invention, the description of the second content item further includes a time indication Se used to indicate a start play time of the second content item. The start play time of the second content item that is indicated by the time indication Se is equal to an end play time of the first content item, or the start play time of the second content item that is indicated by the time indication Se is later than an end play time of the first content item, and a time difference Δt between the start play time of the second content item and the end play time of the first content item is less than a threshold.

Optionally, in some possible implementations of the present invention, the description of the first content item is further used to indicate a time position of the first content item embedded in the first media presentation. The time position of the first content item embedded in the first media presentation is a time position of the first content item arranged in the first media presentation.

Optionally, in some possible implementations of the present invention, the description of the first content item is further used to indicate that a part or an entirety of the first content item is embedded in the first media presentation. That is, the description of the first content item may be further used to indicate that the entirety of the first content item is embedded in the first media presentation, or the description of the first content item may be used to indicate that a part of the first content item is embedded in the first media presentation. "A part" of the first content item may be considered from different dimensions such as time and content. For example, assuming that the first content item is an AdaptationSet, if the description of the first content item indicates that a part of the first content item is embedded in the first media presentation, it may indicate that a part of versions of the AdaptationSet and/or a part of clipped media representations are embedded in the first media presentation. For example, the AdaptationSet includes media representations of five versions whose durations are all 15 minutes. For example, in one case, the description of the first content item may indicate that media representations of two versions whose durations are both 15 minutes among the media representations of the five versions are embedded in the first media presentation. For example, in another case, the description of the first content item may indicate that media representations of three versions whose durations are all 12 minutes (that is, 12-minute media representations clipped from 15-minute media representations) among the media representations of the five versions are embedded in the first media presentation. For example, in still another case, the description of the first content item may indicate that media representations of five versions whose durations are all 12 minutes (that is, 12-minute media representations clipped from 15-minute media representations) among the media representations of the five versions are embedded in the first media presentation.

Optionally, in some possible implementations of the present invention, when the description of the first content item is further used to indicate that a part of the first content item is embedded in the first media presentation, the description of the first content item may be further used to indicate a start play time position and/or an end play time position of the part of the first content item. For example, the description of the first content item may be further used to indicate that the start play time position of the part of the first content item is a start content time position of the first content item, or a content position after a start content time position of the first content item is offset by five minutes.

Optionally, in some possible implementations of the present invention, the description of the first content item includes an offset indication fz, and the offset indication fz is used to indicate an offset between a start play time position and a start content time position of the first content item.

Optionally, in some possible implementations of the present invention, when the second media presentation is a real-time media presentation, and the offset indicated by the offset indication fz is equal to 0, it indicates that the first content item starts to be played from a content position corresponding to a current time; or when the second media presentation is a real-time media presentation, and the offset indicated by the offset indication fz is not equal to 0, it indicates that the first content item starts to be played from a content position corresponding to a current time that is set back by the offset; or when the second media presentation is a real-time media presentation, and the offset indicated by the offset indication fz is not equal to 0, it indicates that the first content item starts to be played from a content position corresponding to the start content position of the first content item that is backward offset by the offset.

Optionally, in some possible implementations of the present invention, when the second media presentation is a non-real-time media presentation, and the offset indicated by the offset indication fz is equal to 0, it indicates that the first content item starts to be played from the start content position of the first content item; or when the second media presentation is a non-real-time media presentation, and the offset indicated by the offset indication fz is not equal to 0, it indicates that the first content item starts to be played from a content position corresponding to the start content position of the first content item that is backward offset by the offset.

Optionally, in some possible implementations of the present invention, the description of the first content item is included in an aggregation method descriptor of the media presentation description, or the pointing information about the description of the first content item is included in an aggregation method descriptor of the media presentation description.

Optionally, in some possible implementations of the present invention, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the first content item is included in the first media presentation description element or the pointing information about the description of the first content item is included in the first media presentation description element.

The first media presentation may be an aggregate media presentation or an ordinary media presentation. The media presentation description may be an aggregate media presentation description or an ordinary media presentation description.

Optionally, in some possible implementations of the present invention, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the first content item is included in the first media presentation description element or the pointing information about the description of the first content item is included in the first media presentation description element.

Optionally, in some possible implementations of the present invention, the aggregate media presentation description further includes a time window indication (the time window indication, for example, may include an attribute @expriy and an attribute @timeAdvance, that is, the attribute @expriy and the attribute @timeAdvance may indicate a time window) corresponding to the first media presentation description element, the time window indication is used to instruct the client to obtain updated content of the aggregate media presentation description from the serving end in a time window indicated by the time window indication, and the updated content includes the first media presentation description element. Because the time window indication is introduced to limit a time period of updating the aggregate media presentation description by the client, this helps better control content playing of the client.

For better understanding the foregoing technical solutions provided by the embodiments of the present invention, the following uses examples for description with reference to some specific application scenarios.

Referring to FIG. 4-a and FIG. 4-b, FIG. 4-b is a schematic flowchart of another content item aggregation method according to another embodiment of the present invention. The content item aggregation method shown in FIG. 4-b may be specifically implemented in a network architecture shown in FIG. 4-a. As shown in FIG. 4-a, the another content item aggregation method provided by the another embodiment of the present invention includes the following steps.

401. A client sends a play request to a serving end, and the serving end receives the play request from the client.

402. The serving end generates a media presentation description of a first media presentation.

The serving end is a device that runs on a network side and provides a service, and includes but is not limited to a server, a CDN node, a login server, or the like. The serving end may be one device, or the serving end may be multiple different devices, and for ease of description, the devices are considered as an entirety.

403. The serving end sends, to the client, the media presentation description used to respond to the program request.

The first media presentation includes a first content item. The media presentation description includes a description of the first content item or the media presentation description includes pointing information about a description of the first content item. The description of the first content item is used to indicate that the first content item comes from a second media presentation. The first media presentation and the second media presentation are different media presentations.

404. The client receives the media presentation description of the first media presentation from the serving end, and the client obtains the first content item according to the description of the first content item.

405. The client plays the first content item.

The first content item may be one of N content items included in the first media presentation, where N is an integer greater than 1 or equal to 1. For example, the first media presentation further includes a second content item, the media presentation description includes a description of the second content item or the media presentation description includes pointing information about a description of the second content item, and the description of the second content item is used to indicate that the second content item comes from the second media presentation or a media presentation X.

Referring to FIG. 4-c, FIG. 4-c illustrates a possible source of each content item in the first media presentation, where some content items come from a real-time media presentation, and other content items may come from a non-real-time media presentation. Certainly, another source of each content item in the first media presentation may be that all content items come from a real-time media presentation. Certainly, another source of each content item in the first media presentation may be that all content items come from a non-real-time media presentation.

It may be understood that, the pointing information about the description of the first content item is used to point to the description of the first content item. For example, the pointing information about the description of the first content item may include a pointer or a URL or the like of the description of the first content item. The description of the first content item may be obtained by using the pointing information about the description of the first content item.

Optionally, in some possible implementations of the present invention, the first content item may be, for example, a content paragraph (Period) or a media representation or an adaptation set or media content in another form.

It may be understood that, all other content items included in the first media presentation may be played in a manner similar to the manner of obtaining and playing the first content item.

Optionally, in some possible implementations of the present invention, the description of the first content item is further used to indicate that the second media presentation is a real-time media presentation or a non-real-time media presentation.

The real-time media presentation, for example, is a live media presentation, for example, a live sports game or a live variety show. The non-real-time media presentation indicates that the media presentation already exists by recording beforehand or in another manner. The non-real-time media presentation, for example, may be a TV series, a movie, a sports game, or a variety show that is recorded beforehand.

Optionally, in some possible implementations of the present invention, the description of the first content item is further used to indicate a time position of the first content item embedded in the first media presentation. The time position of the first content item embedded in the first media presentation is a time position of the first content item arranged in the first media presentation.

Optionally, in some possible implementations of the present invention, the description of the first content item is further used to indicate that a part or an entirety of the first content item is embedded in the first media presentation. That is, the description of the first content item may be further used to indicate that the entirety of the first content item is embedded in the first media presentation, or the description of the first content item may be used to indicate that a part of the first content item is embedded in the first media presentation. "A part" of the first content item may be considered from different dimensions such as time and content. For example, assuming that the first content item is an AdaptationSet, if the description of the first content item indicates that a part of the first content item is embedded in the first media presentation, it may indicate that a part of versions of the AdaptationSet and/or a part of clipped media representations are embedded in the first media presentation. For example, the AdaptationSet includes media representations of five versions whose durations are all 15 minutes. For example, in one case, the description of the first content item may indicate that media representations of two versions whose durations are both 15 minutes among the media representations of the five versions are embedded in the first media presentation. For example, in another case, the description of the first content item may indicate that media representations of three versions whose durations are all 12 minutes (that is, 12-minute media representations clipped from 15-minute media representations) among the media representations of the five versions are embedded in the first media presentation. For example, in still another case, the description of the first content item may indicate that media representations of five versions whose durations are all 12 minutes (that is, 12-minute media representations clipped from 15-minute media representations) among the media representations of the five versions are embedded in the first media presentation.

Optionally, in some possible implementations of the present invention, when the description of the first content item is further used to indicate that a part of the first content item is embedded in the first media presentation, the description of the first content item may be further used to indicate a start play time position and/or an end play time position of the part of the first content item. For example, the description of the first content item may be further used to indicate that the start play time position of the part of the first content item is a start content time position of the first content item, or a content position after a start content time position of the first content item is offset by five minutes.

Optionally, in some possible implementations of the present invention, the description of the first content item includes an offset indication fz, and the offset indication fz is used to indicate an offset between a start play time position and a start content time position of the first content item.

Optionally, in some possible implementations of the present invention, when the second media presentation is a real-time media presentation, and the offset indicated by the offset indication fz is equal to 0, it indicates that the first content item starts to be played from a content position corresponding to a current time; or when the second media presentation is a real-time media presentation, and the offset indicated by the offset indication fz is not equal to 0, it indicates that the first content item starts to be played from a content position corresponding to a current time that is set back by the offset; or when the second media presentation is a real-time media presentation, and the offset indicated by the offset indication fz is not equal to 0, it indicates that the first content item starts to be played from a content position corresponding to the start content position of the first content item that is backward offset by the offset.

Optionally, in some possible implementations of the present invention, when the second media presentation is a non-real-time media presentation, and the offset indicated by the offset indication fz is equal to 0, it indicates that the first content item starts to be played from the start content position of the first content item; or when the second media presentation is a non-real-time media presentation, and the offset indicated by the offset indication fz is not equal to 0, it indicates that the first content item starts to be played from a content position corresponding to the start content position of the first content item that is backward offset by the offset.

Optionally, in some possible implementations of the present invention, the description of the first content item is included in an aggregation method descriptor of the media presentation description, or the pointing information about the description of the first content item is included in an aggregation method descriptor of the media presentation description.

Optionally, in some possible implementations of the present invention, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the first content item is included in the first media presentation description element or the pointing information about the description of the first content item is included in the first media presentation description element.

The first media presentation may be an aggregate media presentation or an ordinary media presentation. The media presentation description may be an aggregate media presentation description or an ordinary media presentation description.

Optionally, in some possible implementations of the present invention, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the first content item is included in the first media presentation description element or the pointing information about the description of the first content item is included in the first media presentation description element.

Optionally, in some possible implementations of the present invention, the aggregate media presentation description further includes a time window indication (the time window indication, for example, may include an attribute @expriy and an attribute @timeAdvance, that is, the attribute @expriy and the attribute @timeAdvance may indicate a time window) corresponding to the first media presentation description element, the time window indication is used to instruct the client to obtain updated content of the aggregate media presentation description from the serving end in a time window indicated by the time window indication, and the updated content includes the first media presentation description element. Because the time window indication is introduced to limit a time period of updating the aggregate media presentation description by the client, this helps better control content playing of the client.

As can be learned, in the technical solution of this embodiment, a content item included in a media presentation may come from another media presentation. That is, content items of other media presentations may be re-aggregated and arranged to form a new media presentation meeting a specific arrangement requirement, and a media presentation description of the new media presentation includes descriptions of the aggregated content items of the other media presentations, so that the client may obtain and play corresponding content items based on this, and the like. In summary, the technical solution of this embodiment helps implement flexible aggregation of media content.

The following uses examples for description with reference to some more specific application scenarios.

In some application scenarios, an aggregate media presentation includes multiple media presentation units, where a media presentation unit is a media presentation or one or more temporally consecutive content items (such as content paragraphs) in a media presentation (hereinafter referred to as a source media presentation for short). The media presentation units are media content different from each other, that is, media components forming the media presentations, coding of the media components, storage locations, media presentation descriptions, and the like. The media presentation units are temporally parallel or sequential. An aggregate media presentation description is a metadata document, and describes the media presentation units in the aggregate media presentation and a relationship between the media presentation units. The aggregate media presentation description is an extension of a media presentation description (document).

In the following descriptions of examples, names of elements or attributes are exemplary. Other names may be used. What is important lies in meanings represented by the names.

A root element of the aggregate media presentation description is an aggregate media presentation description (AMPD) element. Two attributes @expiry and @timeAdvance of the AMPD element are used to update the aggregate media presentation description. Generally, as the time elapses, the compound media presentation description is updated to describe a change of the aggregate media presentation, and in particular, a time extension of the aggregate media presentation. @expiry indicates a validity period of the aggregate media presentation. The validity period is indicated by a wall clock time. Before the validity period expires, content of the AMPD aggregate media presentation description is valid. @timeAdvance indicates a time advance for updating the aggregate media presentation description, that is, an earliest update time of the aggregate media presentation description. The two attributes are combined to define a time window, namely, a time period from texp-tadv to texp, where texp indicates a value of @expiry, and tadv is a value of @timeAdvance.

In the aggregate media presentation description, a syntactic element MediaPresentation is introduced, and a media presentation unit element indicates a media presentation unit. The aggregate media presentation describes a group of media presentation units and a time relationship between the media presentation units.

In the aggregate media presentation description, a source media presentation may be a local one. In this case, the MediaPresentation element includes an MPD element, but the MPD element includes at least one Period element. If a remote media presentation is referenced, a pointer such as an attribute @xlink:href may be used to point to a referenced media presentation description. All or a part may be referenced, that is, one or more consecutive content paragraphs in the media presentation are pointed to. An attribute @periodId may be used to describe a referenced content paragraph.

In many scenarios, two times need to be distinguished: a media content time and an absolute time. A piece of media content is temporally continuous. There is a time range, and a time in the range is a media time of the media content, and is unrelated to the wall clock time. A (time) position in the media content may be positioned by using the media content time.

During playing, the media content time may be mapped to the absolute time. For live broadcast, a fixed correspondence exists between a time position and an absolute time of the media content. However, after the time elapses, the fixed correspondence between the media time and the absolute time no longer exists. The media content may move temporally. A user may join at a current time position of the live media content or a time position before a current position at any time. If media content may be stored, the user obtains previous media content (on an absolute time axis). The user cannot join at a time position after the current time position of the live media content, because it is impossible to obtain future media content in advance. For playing on demand, media content already exists, and a time position of the media content may be mapped to any time instant in the absolute time, and the user may access the media content from any media time position at any time. Content aggregation means that multiple pieces of media content temporally move and are combined.

A movement of the media content in the absolute time may be indicated by two attributes. A start time @startTime indicates a time instant in the absolute time, that is, a time instant from which a piece of media content starts. An offset @timeOffset indicates a time position of the media content. For live broadcast, the offset is relative to a current (currently on the absolute time axis) time position of the media content. Because only previous content can be accessed, a value of the offset is less than or equal to 0. However, for playing on demand, @startTime is a relative time position relative to the start of the media content, and a value of the offset is less than or equal to 0. Therefore, behaviors of a client are different in live broadcast and playing on demand. During live broadcast, the client joins live media content at a time @startTime, and a time position of accessed media content is media content at a time @startTime+@timeOffset. During playing on demand, the client joins on-demand media content at a time @startTime, and a time position of accessed media content starts from @timeOffset.

Content aggregation is in essence a movement of media content in an absolute time (axis) plus a time position offset of the media content. FIG. 5-a shows an example of the foregoing relationship.

The following example is a representation of an aggregate media presentation description, represented by a hierarchical data structure. One element includes several attributes and lower-level elements, and this applies to every layer. Layers are nested.

Meanings of elements and attributes for representing the aggregate media presentation description AMPD may be as follows:
@expiry is used to indicate a validity period of the aggregate media presentation. The aggregate media presentation description may be updated before the validity period expires.
@timeAdvance is used to indicate a time advance for updating the aggregate media presentation description, namely, an earliest time update time of the aggregate media presentation description. It is relative to the time indicated by @expiry, and may be present only when the attribute @expiry is present.
   Presentation is used to describe a media presentation.
@type is used to indicate whether the media presentation is live (generated in real time) or on-demand (existent, and not real-time).
@startTime is used to indicate a start time of a media presentation unit. The attribute is present in a case of sequential combination.
@timeOffset is used to indicate an offset of a media time.
   For a live media presentation, @timeOffset is a (forward) time offset of a media time position relative to the time @startTime of the media presentation unit. For an on-demand media presentation, @timeOffset is a time offset relative to a start position of the media presentation unit.
@periodId indicates a selected period if the MPD pointed to has multiple periods.
@xlink:xref is used to point to a media presentation description.
@xlink:actuate is used to indicate processing of the media presentation description that @xlink:xref points to.

MPD is used to indicate a local media presentation.

FIG. 5-b shows an example of a data structure of an AMPD described by using an XML data rule.

The aggregate media presentation description may be implemented by using another method. This method uses a conventional media presentation description. Multiple media content items are aggregated (temporally) in sequence by using a hook between content paragraphs. (One) media content item is one content paragraph in (one) media presentation. It should be noted that, sources of the media content items may be different from each other, and are content paragraphs of different media presentations. A "hook" mechanism uses a descriptor to describe a time relationship between a hooked (aggregated) content paragraph and a current content paragraph (a content paragraph to which the descriptor belongs). The mechanism has a method identifier and a corresponding parameter set. The client explains, according to the method identifier, the parameter set accompanying the method identifier. If the client does not recognize the method identifier, the client cannot understand or explain the parameter set, parameters, a sequence of parameters, values, and the like.

The following defines a method for linking a content paragraph.

A method identifier is "urn:mpeg:dash:mpd-linking:2015", and parameters of the method are as follows:

Direction is used to indicate a link direction and a time relationship between a linked content paragraph and a current content paragraph. A forward link (pre-roll) indicates that the linked content paragraph is inserted before the current content paragraph. A backward link (post-roll) indicates that the linked content paragraph is inserted before the current content paragraph. The current content paragraph (local) indicates that the linked content paragraph is used as the current content paragraph.
type is used to indicate nature of referenced content (a real-time or non-real-time media presentation).
mpdUrl is used to indicate a URL of a media presentation description of the referenced content.
periodId is used to indicate a referenced content paragraph.
timeOffset is used to indicate a time offset relative to a start of a program paragraph. If target content is non-real-time and already exists, a start time of the program paragraph may be 0. If target content is real-time, such as live content, a start time of the program paragraph is a time instant in an absolute time.

When type = 1 (indicating a real-time media presentation), if the timeOffset is absent, it indicates that a user joins a linked media presentation at a current time position of the live content.
duration is used to indicate a duration of a linked content item. Referring to FIG. 5-c, in an example shown in FIG. 5-c, each of multiple content items is a content paragraph described in different media presentation descriptions. Some content items are non-real-time, but other content items are real-time. A temporally continuous media presentation description is generated through content aggregation.

Referring to FIG. 5-d, in an example shown in FIG. 5-d, client behavior control is introduced in addition to content aggregation. There are two content items. Content item B is a recorded advertisement, and it has a corresponding media presentation description. Content item A is a real-time badminton game, and starts at a time t0. A content provider wishes a user to view advertisement B before watching the game. The content provider publishes a media presentation description of media content A. It should be noted that an EssentialProperty descriptor is added to a content paragraph element corresponding to content item A. The client needs to process the descriptor. Otherwise, the client cannot identify a method identifier of the descriptor, and should give up processing the content item. The method identifier of the descriptor tells the client that this is a method for linking a content paragraph. Meanings of parameters are as follows: A content paragraph is inserted ahead, content of the content paragraph inserted ahead is non-real-time, the content paragraph inserted ahead references a content paragraph ad1 in the media presentation description whose URL is http://example.com/ad/ad1.mpd, and the content paragraph inserted ahead starts from a start time position of the referenced content paragraph.

FIG. 5-e shows an example of a time relationship between content items. As shown in FIG. 5-e, whenever the user starts to receive a program, the user needs to first view content item B, and then can view content item A. A real-time content paragraph starts at a time t0. The user starts to view the program at a time t1. The user first views content item B inserted ahead, and starts to view content item A after the content ends. In this case, it is already t2. The user does not view the part of the content paragraph from t0 to t1, shown by a dashed-line block in the figure. t1 to t2 is a duration of content item B.

The following example is an example of a live program of an advertisement inserted ahead. A serving end provides a piece of live content. Whenever a user (client) joins live broadcast, the user first views an advertisement inserted ahead and then joins the live broadcast.

The following describes the example from a serving end (network device side) and a client separately.

A service process starts when the client sends a request for a live program. The serving end generates an aggregate media description after receiving the request. The aggregate media description uses a current time t0 as a time reference point. The aggregate media description may indicate, by using presence of an attribute @expiry, that the aggregate media presentation description is dynamically updated and will be invalid (expire) after a time t1 indicated by @expiry. An aggregate media description of a next version may be obtained at the time t1 to a time tw1 (a time window is formed by the time t1 to the time tw1). An aggregate media presentation description of a first version includes a MediaPresentation element. A start time tp1 of a media presentation described by the element is indicated by an attribute @start. The MediaPresentation element includes a pointer pointing to a media presentation description MPD1 of an advertisement inserted ahead. From t1 to tw1, an aggregate media presentation description of a second version replaces the aggregate media presentation description of the first version. A second MediaPresentation element is added to the aggregate media presentation description of the second version, and the MediaPresentation element provides description information of the live program. It is a live program. A start access time tp2 is provided by an attribute @start of the element, and the time is also an end time of a first content item. Presence of an attribute @offset tells the client to join the live program in a delayed manner according to a time offset (-Δt), not at the current time tp2, that is, join the live program at tp2 - Δt. For a live media presentation, a numeric value of the time offset is non-positive, that is, a delay time is greater than or equal to 0, because generally it is impossible to join the live program in advance.

After sending the request, the client receives the aggregate media presentation returned by the serving end, and the client parses the aggregate media presentation. The client processes the first content item (media presentation) according to an MPD1 from tp1 to tp2. In this period, the client requests an updated aggregate media presentation description at a time tc1 (t1-tw1 < tc1 < t1) according to indications of @expriy and @timeAdvance, and obtains an MPD2 according to a second MediaPresentation element in the aggregate media presentation description. In this case, the first content item is still played. At tp2, the first media presentation ends, and a second media presentation starts to be processed. A red line segment in the figure indicates a processing time of the first media presentation, and a green line segment indicates a processing time of the first media presentation. It should be particularly noted that, the second media presentation is live content. The MPD2 may be dynamically updated. The client obtains the updated MPD2. This process is performed by the client according to information in the MPD2. The MPD2 may be updated for multiple times, but this process is unrelated to the aggregate media presentation description AMPD. In addition, the MPD1, the MPD2, and the AMPD may come from different servers respectively. This is reflected by different server names or IP addresses in URLs.

The following uses another scenario as an example. In this application scenario, an aggregate media presentation is formed by aggregating three different media presentations. A first part of the aggregate media presentation (also referred to as a compound media presentation) is a local media presentation. In a compound media presentation description, an MPD element is located below a media presentation element MediaPresentation. The MPD element describes a media presentation, and includes a period. In the compound media presentation description used as an example, for brevity, only one Period element below the MPD element is reserved, but other elements and attributes are omitted.

FIG. 5-f shows an example of an AMPD. The media presentation is of a live type, and the live media presentation is accessed at 2015-3-25 10:00. A position for joining the media presentation is a current position of the live media presentation on an absolute time axis.

A second part of the aggregate media presentation is also a remote media presentation. The media presentation is of an on-demand type. It is an inserted advertisement, and is accessed from a start position. A third part of the compound media presentation is a remote media presentation. An attribute @xlink:herf points to a uniform resource locator URL of a media presentation description of the media presentation. It can be learned from the URL that a source of the third part of the media presentation is different from that of the first part of the media presentation. The media presentation is of the live type, and a content paragraph m1 in the media presentation is referenced. The live media presentation is joined at 2015-3-25 10:22. However, it is not joined at a current position (media time) of the media presentation, where a current position of media content is a position of the media content corresponding to the absolute time 10:22, but joined 10 minutes before the current position of the live media presentation, that is, a position of the media content corresponding to the absolute time. This is equivalent to delaying the live media presentation by 10 minutes, and the delay time is indicated by @timeOffset, in units of seconds.

The following uses another scenario as an example. As shown in FIG. 5-g, in the application scenario, this is an example of aggregating content temporally in parallel. Multiple media presentations are temporally parallel, and they are described in one description document. Media presentations aggregated temporally in parallel are the same in nature, live or on-demand. Actually, the media presentations aggregated temporally in parallel provide a guide method based on a client.

The method is mainly based on a client, and processing may not be performed on each media presentation in a delivery step. According to the DASH specification, a media presentation is formed by temporally sequential content paragraphs. Multiple media presentations and arrangements of content paragraphs are mutually independent, and are interleaved temporally. This time structure cannot be processed by DASH. To adapt to a DASH requirement, certainly recoding may be performed on the media presentations, and boundaries of time periods are eliminated. In this way, multiple media presentations may be included in a content paragraph. A benefit of this practice is that only a small extension needs to be introduced into the DASH specification. Processing on the client is simple, but costs are that processing (recoding) needs to be performed on the media presentations. To some extent, complexity is increased.

In this embodiment, an aggregate media presentation description includes multiple MediaPresentation elements. Each MediaPresentation element corresponds to one media presentation. The MediaPresentation element may be a local one and include an MPD and an element that belongs to the MPD, or may be a non-local one and reference a remote media presentation description. The MediaPresentation elements keep respective content paragraphs and time structures without changes.

To better indicate concurrency of the media presentations, any Presentation element does not carry an attribute @startTime, or each Presentation element carries an attribute @startTime, and values of @startTime are the same. The former indicates that each media presentation is available when the compound media presentation description is available. The latter indicates that each presentation is available at a time indicated by @startTime.

After receiving the compound media presentation, the client may create a DASH client instance for each media presentation, and perform processing such as obtaining a media segment of the media presentation, and decoding and playing media data.

A spatial position relationship descriptor element is introduced in the Presentation element. @schemeIdUri in an EssentialProperty element indicates a rule referenced by the descriptor, where @value is a parameter of the referenced rule.

In this example, the referenced rule is distinguished (identified) by a uniform resource name urn:mpeg:dash:srd:2013. The rule is used to identify a spatial relationship. A value of @value is a parameter required by the rule. For example, second and third numeric values indicate coordinates in an upper left corner of an object (presentation herein), and fourth and fifth numeric values indicate a width and a height of the object.

It may be understood that, the foregoing examples are illustrative, and may be adjusted adaptively according to a specific requirement in an actual application.

Referring to FIG. 6, an embodiment of the present invention provides a serving end 600, including:
a generation unit 610, configured to generate a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation and the second media presentation are different media presentations; and
a processing unit 620, configured to store or send the media presentation description.

Optionally, in some possible implementations of the present invention, the description of the content item is further used to indicate that the second media presentation is a real-time media presentation or a non-real-time media presentation.

Optionally, in some possible implementations of the present invention, the description of the content item is further used to indicate a time position of the content item embedded in the first media presentation.

Optionally, in some possible implementations of the present invention, the description of the content item is further used to indicate that a part or an entirety of the content item is embedded in the first media presentation.

Optionally, in some possible implementations of the present invention, when the description of the content item is further used to indicate that a part of the content item is embedded in the first media presentation, the description of the content item is further used to indicate a start play time position and/or an end play time position of the part of the content item.

Optionally, in some possible implementations of the present invention, the description of the content item includes an offset indication fz, and the offset indication fz is used to indicate an offset between a start play time position and a start content time position of the content item.

Optionally, in some possible implementations of the present invention, when the second media presentation is a real-time media presentation, and the offset indicated by the offset indication fz is equal to 0, it indicates that the content item starts to be played from a content position corresponding to a current time; or when the second media presentation is a real-time media presentation, and the offset indicated by the offset indication fz is not equal to 0, it indicates that the content item starts to be played from a content position corresponding to a current time that is set back by the offset; or when the second media presentation is a real-time media presentation, and the offset indicated by the offset indication fz is not equal to 0, it indicates that the content item starts to be played from a content position corresponding to the start content position of the content item that is backward offset by the offset.

Optionally, in some possible implementations of the present invention, when the second media presentation is a non-real-time media presentation, and the offset indicated by the offset indication fz is equal to 0, it indicates that the content item starts to be played from the start content position of the content item; or when the second media presentation is a non-real-time media presentation, and the offset indicated by the offset indication fz is not equal to 0, it indicates that the content item starts to be played from a content position corresponding to the start content position of the content item that is backward offset by the offset.

Optionally, in some possible implementations of the present invention, the description of the content item is included in an aggregation method descriptor of the media presentation description, or the pointing information about the description of the content item is included in an aggregation method descriptor of the media presentation description.

Optionally, in some possible implementations of the present invention, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the content item is included in the first media presentation description element or the pointing information about the description of the content item is included in the first media presentation description element.

Optionally, in some possible implementations of the present invention, the aggregate media presentation description further includes a time window indication corresponding to the first media presentation description element, the time window indication is used to instruct a client to obtain updated content of the aggregate media presentation description from the serving end in a time window indicated by the time window indication, and the updated content includes the first media presentation description element.

Optionally, in some possible implementations of the present invention, the content item is a content paragraph or a media representation or an adaptation set.

It may be understood that, functions of each functional module of the serving end 600 in this embodiment may be specifically implemented according to the method in the foregoing method embodiment. For a specific implementation process thereof, refer to the related description in the foregoing method embodiment. Details are not described again herein.

As can be learned, in the technical solution of this embodiment, the content item included in the first media presentation may come from the second media presentation. That is, some or all content items of several other media presentations may be re-aggregated and arranged to form a new media presentation meeting a specific arrangement requirement, and a media presentation description of the new media presentation includes descriptions of the aggregated content items of the other media presentations, so that the client may obtain and play corresponding content items based on this, and the like. In summary, the technical solution of this embodiment helps implement flexible aggregation of media content.

Referring to FIG. 7, an embodiment of the present invention provides a client 700, including:
a first obtaining unit 710, configured to obtain a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation and the second media presentation are different media presentations;
a second obtaining unit 720, configured to obtain the content item according to the description of the content item; and
a play unit 730, configured to play the content item.

Optionally, in some possible implementations of the present invention, the description of the content item is further used to indicate that the second media presentation is a real-time media presentation or a non-real-time media presentation.

Optionally, in some possible implementations of the present invention, the description of the content item is further used to indicate a time position of the content item embedded in the first media presentation.

Optionally, in some possible implementations of the present invention, the description of the content item is further used to indicate that a part or an entirety of the content item is embedded in the first media presentation.

Optionally, in some possible implementations of the present invention, when the description of the content item is further used to indicate that a part of the content item is embedded in the first media presentation, the description of the content item is further used to indicate a start play time position and/or an end play time position of the part of the content item.

Optionally, in some possible implementations of the present invention, the description of the content item includes an offset indication fz, and the offset indication fz is used to indicate an offset between a start play time position and a start content time position of the content item.

Optionally, in some possible implementations of the present invention, when the second media presentation is a real-time media presentation, and the offset indicated by the offset indication fz is equal to 0, it indicates that the content item starts to be played from a content position corresponding to a current time; or when the second media presentation is a real-time media presentation, and the offset indicated by the offset indication fz is not equal to 0, it indicates that the content item starts to be played from a content position corresponding to a current time that is set back by the offset; or when the second media presentation is a real-time media presentation, and the offset indicated by the offset indication fz is not equal to 0, it indicates that the content item starts to be played from a content position corresponding to the start content position of the content item that is backward offset by the offset.

Optionally, in some possible implementations of the present invention, when the second media presentation is a non-real-time media presentation, and the offset indicated by the offset indication fz is equal to 0, it indicates that the content item starts to be played from the start content position of the content item; or when the second media presentation is a non-real-time media presentation, and the offset indicated by the offset indication fz is not equal to 0, it indicates that the content item starts to be played from a content position corresponding to the start content position of the content item that is backward offset by the offset.

Optionally, in some possible implementations of the present invention, the description of the content item is included in an aggregation method descriptor of the media presentation description, or the pointing information about the description of the content item is included in an aggregation method descriptor of the media presentation description.

Optionally, in some possible implementations of the present invention, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the content item is included in the first media presentation description element or the pointing information about the description of the content item is included in the first media presentation description element.

Optionally, in some possible implementations of the present invention, the aggregate media presentation description further includes a time window indication corresponding to the first media presentation description element, the time window indication is used to instruct the client to obtain updated content of the aggregate media presentation description from the serving end in a time window indicated by the time window indication, and the updated content may include the first media presentation description element.

Optionally, in some possible implementations of the present invention, the content item is a content paragraph or a media representation or an adaptation set.

It may be understood that, functions of each functional module of the client 700 in this embodiment may be specifically implemented according to the method in the foregoing method embodiment. For a specific implementation process thereof, refer to the related description in the foregoing method embodiment. Details are not described again herein.

As can be learned, in the technical solution of this embodiment, the content item included in the first media presentation may come from the second media presentation. That is, some or all content items of several other media presentations may be re-aggregated and arranged to form a new media presentation meeting a specific arrangement requirement, and a media presentation description of the new media presentation includes descriptions of the aggregated content items of the other media presentations, so that the client may obtain and play corresponding content items based on this, and the like. In summary, the technical solution of this embodiment helps implement flexible aggregation of media content.

Referring to FIG. 8, FIG. 8 is a structural block diagram of a serving end 800 according to another embodiment of the present invention. The serving end 800 may include at least one processor 801, a memory 805, and at least one communications bus 802. The communications bus 802 is configured to implement connection and communication between the components.

The serving end 800 may optionally include at least one network interface 804 and/or a user interface 803. The user interface 803 may include a display (for example, a touchscreen, an LCD, a holographic imaging, a CRT, or a projector), a pointing device (for example, a mouse, a trackball, a touchpad, or a touchscreen), a camera, and/or a pickup apparatus, or the like.

The memory 805 may include a read-only memory and a random access memory, and provide an instruction and data to the processor 801. A part of the memory 805 may further include a non-volatile random access memory.

In some implementations, the memory 805 stores the following elements, executable modules or data structures, or a subset thereof, or an extended set thereof:
an operating system 8051, including various system programs, configured to implement various basic services and process hardware-based tasks; and
an application program module 8052, including various application programs, configured to implement various application services.

In this embodiment of the present invention, by invoking the program or instruction stored in the memory 805, the processor 801 generates a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation and the second media presentation are different media presentations; and stores or sends the media presentation description.

Optionally, in some possible implementations of the present invention, the description of the content item is further used to indicate that the second media presentation is a real-time media presentation or a non-real-time media presentation.

Optionally, in some possible implementations of the present invention, the description of the content item is further used to indicate a time position of the content item embedded in the first media presentation.

Optionally, in some possible implementations of the present invention, the description of the content item is further used to indicate that a part or an entirety of the content item is embedded in the first media presentation.

Optionally, in some possible implementations of the present invention, when the description of the content item is further used to indicate that a part of the content item is embedded in the first media presentation, the description of the content item is further used to indicate a start play time position and/or an end play time position of the part of the content item.

Optionally, in some possible implementations of the present invention, the description of the content item includes an offset indication fz, and the offset indication fz is used to indicate an offset between a start play time position and a start content time position of the content item.

Optionally, in some possible implementations of the present invention, when the second media presentation is a real-time media presentation, and the offset indicated by the offset indication fz is equal to 0, it indicates that the content item starts to be played from a content position corresponding to a current time; or when the second media presentation is a real-time media presentation, and the offset indicated by the offset indication fz is not equal to 0, it indicates that the content item starts to be played from a content position corresponding to a current time that is set back by the offset; or when the second media presentation is a real-time media presentation, and the offset indicated by the offset indication fz is not equal to 0, it indicates that the content item starts to be played from a content position corresponding to the start content position of the content item that is backward offset by the offset.

Optionally, in some possible implementations of the present invention, when the second media presentation is a non-real-time media presentation, and the offset indicated by the offset indication fz is equal to 0, it indicates that the content item starts to be played from the start content position of the content item; or when the second media presentation is a non-real-time media presentation, and the offset indicated by the offset indication fz is not equal to 0, it indicates that the content item starts to be played from a content position corresponding to the start content position of the content item that is backward offset by the offset.

Optionally, in some possible implementations of the present invention, the description of the content item is included in an aggregation method descriptor of the media presentation description, or the pointing information about the description of the content item is included in an aggregation method descriptor of the media presentation description.

Optionally, in some possible implementations of the present invention, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the content item is included in the first media presentation description element or the pointing information about the description of the content item is included in the first media presentation description element.

Optionally, in some possible implementations of the present invention, the aggregate media presentation description further includes a time window indication corresponding to the first media presentation description element, the time window indication is used to instruct a client to obtain updated content of the aggregate media presentation description from the serving end in a time window indicated by the time window indication, and the updated content includes the first media presentation description element.

Optionally, in some possible implementations of the present invention, the content item is a content paragraph or a media representation or an adaptation set.

It may be understood that, functions of each functional module of the serving end 800 in this embodiment may be specifically implemented according to the method in the foregoing method embodiment. For a specific implementation process thereof, refer to the related description in the foregoing method embodiment. Details are not described again herein.

As can be learned, in the technical solution of this embodiment, the content item included in the first media presentation may come from the second media presentation. That is, some or all content items of several other media presentations may be re-aggregated and arranged to form a new media presentation meeting a specific arrangement requirement, and a media presentation description of the new media presentation includes descriptions of the aggregated content items of the other media presentations, so that the client may obtain and play corresponding content items based on this, and the like. In summary, the technical solution of this embodiment helps implement flexible aggregation of media content.

Referring to FIG. 9, FIG. 9 is a structural block diagram of a client 900 according to another embodiment of the present invention. The client 900 may include at least one processor 901, a memory 905, and at least one communications bus 902. The communications bus 902 is configured to implement connection and communication between the components.

The client 900 may optionally include at least one network interface 904 and/or a user interface 903. The user interface 903 may include a display (for example, a touchscreen, an LCD, a holographic imaging, a CRT, or a projector), a pointing device (for example, a mouse, a trackball, a touchpad, or a touchscreen), a camera, and/or a pickup apparatus, or the like.

The memory 905 may include a read-only memory and a random access memory, and provide an instruction and data to the processor 901. A part of the memory 905 may further include a non-volatile random access memory.

In some implementations, the memory 905 stores the following elements, executable modules or data structures, or a subset thereof, or an extended set thereof:
an operating system 9051, including various system programs, configured to implement various basic services and process hardware-based tasks; and
an application program module 9052, including various application programs, configured to implement various application services.

In this embodiment of the present invention, by invoking the program or instruction stored in the memory 905, the processor 901 obtains a media presentation description of a first media presentation, where the first media presentation includes a content item, the media presentation description includes a description of the content item or the media presentation description includes pointing information about a description of the content item, the description of the content item is used to indicate that the content item comes from a second media presentation, and the first media presentation and the second media presentation are different media presentations; obtains the content item according to the description of the content item; and plays the content item.

Optionally, in some possible implementations of the present invention, the description of the content item is further used to indicate that the second media presentation is a real-time media presentation or a non-real-time media presentation.

Optionally, in some possible implementations of the present invention, the description of the content item is further used to indicate a time position of the content item embedded in the first media presentation.

Optionally, in some possible implementations of the present invention, the description of the content item is further used to indicate that a part or an entirety of the content item is embedded in the first media presentation.

Optionally, in some possible implementations of the present invention, when the description of the content item is further used to indicate that a part of the content item is embedded in the first media presentation, the description of the content item is further used to indicate a start play time position and/or an end play time position of the part of the content item.

Optionally, in some possible implementations of the present invention, the description of the content item includes an offset indication fz, and the offset indication fz is used to indicate an offset between a start play time position and a start content time position of the content item.

Optionally, in some possible implementations of the present invention, when the second media presentation is a real-time media presentation, and the offset indicated by the offset indication fz is equal to 0, it indicates that the content item starts to be played from a content position corresponding to a current time; or when the second media presentation is a real-time media presentation, and the offset indicated by the offset indication fz is not equal to 0, it indicates that the content item starts to be played from a content position corresponding to a current time that is set back by the offset; or when the second media presentation is a real-time media presentation, and the offset indicated by the offset indication fz is not equal to 0, it indicates that the content item starts to be played from a content position corresponding to the start content position of the content item that is backward offset by the offset.

Optionally, in some possible implementations of the present invention, when the second media presentation is a non-real-time media presentation, and the offset indicated by the offset indication fz is equal to 0, it indicates that the content item starts to be played from the start content position of the content item; or when the second media presentation is a non-real-time media presentation, and the offset indicated by the offset indication fz is not equal to 0, it indicates that the content item starts to be played from a content position corresponding to the start content position of the content item that is backward offset by the offset.

Optionally, in some possible implementations of the present invention, the description of the content item is included in an aggregation method descriptor of the media presentation description, or the pointing information about the description of the content item is included in an aggregation method descriptor of the media presentation description.

Optionally, in some possible implementations of the present invention, the first media presentation is an aggregate media presentation, the media presentation description is an aggregate media presentation description, the aggregate media presentation description includes N media presentation description elements, N is an integer greater than 1 or equal to 1, a first media presentation description element is one of the N media presentation description elements included in the aggregate media presentation description, and the description of the content item is included in the first media presentation description element or the pointing information about the description of the content item is included in the first media presentation description element.

Optionally, in some possible implementations of the present invention, the aggregate media presentation description further includes a time window indication corresponding to the first media presentation description element, the time window indication is used to instruct the client to obtain updated content of the aggregate media presentation description from the serving end in a time window indicated by the time window indication, and the updated content includes the first media presentation description element.

Optionally, in some possible implementations of the present invention, the content item is a content paragraph or a media representation or an adaptation set.

It may be understood that, functions of each functional module of the serving end 900 in this embodiment may be specifically implemented according to the method in the foregoing method embodiment. For a specific implementation process thereof, refer to the related description in the foregoing method embodiment. Details are not described again herein.

As can be learned, in the technical solution of this embodiment, the content item included in the first media presentation may come from the second media presentation. That is, some or all content items of several other media presentations may be re-aggregated and arranged to form a new media presentation meeting a specific arrangement requirement, and a media presentation description of the new media presentation includes descriptions of the aggregated content items of the other media presentations, so that the client may obtain and play corresponding content items based on this, and the like. In summary, the technical solution of this embodiment helps implement flexible aggregation of media content.

An embodiment of the present invention provides a communications system, including any client provided by the embodiments of the present invention and any serving end provided by the embodiments of the present invention.

An embodiment of the present invention further provides a computer storage medium. The computer storage medium may store a program. When the program is executed, some or all steps of any content item aggregation method described in the foregoing method embodiments may be performed.

It should be noted that, to make the description brief, the foregoing method embodiments are expressed as a series of actions. However, persons skilled in the art should appreciate that the present invention is not limited to the described action sequence, because according to the present invention, some steps may be performed in other sequences or performed simultaneously. In addition, persons skilled in the art should also appreciate that all the embodiments described in the specification are example embodiments, and the related actions and modules are not necessarily mandatory to the present invention.

In the foregoing embodiments, the description of each embodiment has respective focuses. For a part that is not described in detail in an embodiment, reference may be made to related descriptions in other embodiments.

In the several embodiments provided in the present application, it should be understood that the disclosed apparatus may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a read-only memory (ROM), a random access memory (RAM), a removable hard disk, a magnetic disk, or an optical disc.

## Claims

1. A content item aggregation method, comprising:
Obtaining (S301), by a client, a media presentation description of a first media presentation, wherein the first media presentation comprises a content item, the media presentation description comprises a description of the content item or the media presentation description comprises pointing information about a description of the content item, the description of the content item is used to indicate that the content item comes from a second media presentation, and the first media presentation and the second media presentation are different media presentations; and
obtaining (S302), by the client, the content item according to the description of the content item; and playing (S303), by the client, the content item;
the description of the content item is further used to indicate that a part or an entirety of the content item is embedded in the first media presentation;
when the description of the content item is further used to indicate that a part of the content item is embedded in the first media presentation, the description of the content item is further used to indicate a start play time position and/or an end play time position of the part of the content item; **characterized in that**
the description of the content item comprises an offset indication fz, and the offset indication fz is used to indicate an offset between a start play time position and a start content time position of the content item;
when the second media presentation is a real-time media presentation, and the offset indicated by the offset indication fz is equal to 0, it indicates that the content item starts to be played from a content position corresponding to a current time; or when the second media presentation is a real-time media presentation, and the offset indicated by the offset indication fz is not equal to 0, it indicates that the content item starts to be played from a content position corresponding to a current time that is set back by the offset; or when the second media presentation is a real-time media presentation, and the offset indicated by the offset indication fz is not equal to 0, it indicates that the content item starts to be played from a content position corresponding to the start content position of the content item that is backward offset by the offset.

2. The method according to claim 1, wherein
the description of the content item is further used to indicate that the second media presentation is a real-time media presentation or a non-real-time media presentation.

3. The method according to claim 1 or 2, wherein
the description of the content item is further used to indicate a time position of the content item embedded in the first media presentation.

4. The method according to claim 1, wherein when the second media presentation is a non-real-time media presentation, and the offset indicated by the offset indication fz is equal to 0, it indicates that the content item starts to be played from the start content position of the content item; or when the second media presentation is a non-real-time media presentation, and the offset indicated by the offset indication fz is not equal to 0, it indicates that the content item starts to be played from a content position corresponding to the start content position of the content item that is backward offset by the offset.

5. The method according to any one of claims 1 to 4, wherein the description of the content item is comprised in an aggregation method descriptor of the media presentation description, or the pointing information about the description of the content item is comprised in an aggregation method descriptor of the media presentation description.

6. The method according to any one of claims 1 to 4, wherein the first media presentation is an aggregate media presentation, the media presentation description is an aggregate media presentation description, the aggregate media presentation description comprises N media presentation description elements, N is an integer greater than 1 or equal to 1, a first media presentation description element is one of the N media presentation description elements comprised in the aggregate media presentation description, and the description of the content item is comprised in the first media presentation description element or the pointing information about the description of the content item is comprised in the first media presentation description element.

7. The method according to claim 6, wherein the aggregate media presentation description further comprises a time window indication corresponding to the first media presentation description element, the time window indication is used to instruct the client to obtain updated content of the aggregate media presentation description from a serving end in a time window indicated by the time window indication, and the updated content comprises the first media presentation description element.

8. A client (700), comprising:
a first obtaining unit (710), configured to obtain a media presentation description of a first media presentation, wherein the first media presentation comprises a content item, the media presentation description comprises a description of the content item or the media presentation description comprises pointing information about a description of the content item, the description of the content item is used to indicate that the content item comes from a second media presentation, and the first media presentation and the second media presentation are different media presentations;
a second obtaining unit (720), configured to obtain the content item according to the description of the content item; and
a play unit (730), configured to play the content item;
the description of the content item is further used to indicate that a part or an entirety of the content item is embedded in the first media presentation; **characterized in that**
when the description of the content item is further used to indicate that a part of the content item is embedded in the first media presentation, the description of the content item is further used to indicate a start play time position and/or an end play time position of the part of the content item;
the description of the content item comprises an offset indication fz, and the offset indication fz is used to indicate an offset between a start play time position and a start content time position of the content item;
when the second media presentation is a real-time media presentation, and the offset indicated by the offset indication fz is equal to 0, it indicates that the content item starts to be played from a content position corresponding to a current time; or when the second media presentation is a real-time media presentation, and the offset indicated by the offset indication fz is not equal to 0, it indicates that the content item starts to be played from a content position corresponding to a current time that is set back by the offset; or when the second media presentation is a real-time media presentation, and the offset indicated by the offset indication fz is not equal to 0, it indicates that the content item starts to be played from a content position corresponding to the start content position of the content item that is backward offset by the offset.

9. The client (700) according to claim 8, wherein
the description of the content item is further used to indicate that the second media presentation is a real-time media presentation or a non-real-time media presentation.

10. The client (700) according to claim 8 or 9, wherein
the description of the content item is further used to indicate a time position of the content item embedded in the first media presentation.

## Patentansprüche

1. Inhaltselement-Aggregationsverfahren, umfassend:
Beziehen (S301) einer Medienpräsentationsbeschreibung einer ersten Medienpräsentation durch einen Client, wobei die erste Medienpräsentation ein Inhaltselement umfasst, wobei die Medienpräsentationsbeschreibung eine Beschreibung des Inhaltselements umfasst oder wobei die Medienpräsentationsbeschreibung Zeigeinformationen über eine Beschreibung des Inhaltselements umfasst, wobei die Beschreibung des Inhaltselements verwendet wird, um anzuzeigen, dass das Inhaltselement aus einer zweiten Medienpräsentation stammt, und wobei die erste Medienpräsentation und die zweite Medienpräsentation unterschiedliche Medienpräsentationen sind; und Beziehen (S302) des Inhaltselements durch den Client gemäß der Beschreibung des Inhaltselements; und Wiedergeben (S303) des Inhaltselements durch den Client;
wobei die Beschreibung des Inhaltselements ferner verwendet wird, um anzuzeigen, dass ein Teil oder eine Gesamtheit des Inhaltselements in die erste Medienpräsentation eingebettet ist;
wobei, wenn die Beschreibung des Inhaltselements ferner verwendet wird, um anzuzeigen, dass ein Teil des Inhaltselements in die erste Medienpräsentation eingebettet ist, die Beschreibung des Inhaltselements ferner verwendet wird, um eine Startwiedergabezeitposition und/oder eine Endwiedergabezeitposition des Teils des Inhaltselements anzuzeigen; **dadurch gekennzeichnet, dass** die Beschreibung des Inhaltselements eine Versatzanzeige fz umfasst und die Versatzanzeige fz verwendet wird, um einen Versatz zwischen einer Startwiedergabezeitposition und einer Startinhaltzeitposition des Inhaltselements anzuzeigen;
wobei, wenn die zweite Medienpräsentation eine Echtzeit-Medienpräsentation ist und der durch die Versatzanzeige fz angezeigte Versatz gleich 0 ist, dies anzeigt, dass das Inhaltselement damit startet, von einer Inhaltsposition abgespielt zu werden, die einer aktuellen Zeit entspricht; oder wenn die zweite Medienpräsentation eine Echtzeit-Medienpräsentation ist und der durch die Versatzanzeige fz angezeigte Versatz ungleich 0 ist, dies anzeigt, dass das Inhaltselement damit startet, ab einer Inhaltsposition abgespielt zu werden, die einer aktuellen Zeit entspricht, die durch den Versatz zurückgesetzt ist; oder wenn die zweite Medienpräsentation eine Echtzeit-Medienpräsentation ist und der durch die Versatzanzeige fz angezeigte Versatz ungleich 0 ist, dies anzeigt, dass das Inhaltselement damit startet, ab einer Inhaltsposition abgespielt zu werden, die der Startinhaltsposition von dem Inhaltselement, das durch den Versatz nach hinten versetzt ist, entspricht.

2. Verfahren nach Anspruch 1, wobei die Beschreibung des Inhaltselements ferner verwendet wird, um anzuzeigen, dass die zweite Medienpräsentation eine Echtzeit-Medienpräsentation oder eine Nicht-Echtzeit-Medienpräsentation ist.

3. Verfahren nach Anspruch 1 oder 2, wobei die Beschreibung des Inhaltselements ferner verwendet wird, um eine Zeitposition des Inhaltselements anzuzeigen, das in die erste Medienpräsentation eingebettet ist.

4. Verfahren nach Anspruch 1, wobei wenn es sich bei der zweiten Medienpräsentation um eine Nicht-Echtzeit-Medienpräsentation handelt und der durch die Versatzanzeige fz angezeigte Versatz gleich 0 ist, dies anzeigt, dass das Inhaltselement damit startet, ab der Startinhaltsposition des Inhaltselements abgespielt zu werden; oder wenn die zweite Medienpräsentation eine Nicht-Echtzeit-Medienpräsentation ist und der durch die Versatzanzeige fz angezeigte Versatz ungleich 0 ist, dies anzeigt, dass das Inhaltselement damit startet, ab einer Inhaltsposition abgespielt zu werden, die der Startinhaltsposition des Inhaltselements, das durch den Versatz nach hinten versetzt ist, entspricht.

5. Verfahren nach einem der Ansprüche 1 bis 4, wobei die Beschreibung des Inhaltselements in einem Aggregationsverfahrensdeskriptor der Medienpräsentationsbeschreibung enthalten ist, oder die Zeigeinformationen über die Beschreibung des Inhaltselements in einem Aggregationsverfahrensdeskriptor der Medienpräsentationsbeschreibung enthalten ist.

6. Verfahren nach einem der Ansprüche 1 bis 4, wobei die erste Medienpräsentation eine aggregierte Medienpräsentation ist, die Medienpräsentationsbeschreibung eine aggregierte Medienpräsentationsbeschreibung ist, die aggregierte Medienpräsentationsbeschreibung N Medienpräsentationsbeschreibungselemente umfasst, N eine ganze Zahl ist, die größer als 1 oder gleich 1 ist, ein erstes Medienpräsentationsbeschreibungselement eines der N Medienpräsentationsbeschreibungselemente ist, die in der aggregierten Medienpräsentationsbeschreibung enthalten sind, und die Beschreibung des Inhaltselements in dem ersten Medienpräsentationsbeschreibungselement enthalten ist, oder die Zeigeinformationen über die Beschreibung des Inhaltselements in dem ersten Medienpräsentationbeschreibungselement enthalten ist.

7. Verfahren nach Anspruch 6, wobei die aggregierte Medienpräsentationsbeschreibung ferner eine Zeitfensteranzeige umfasst, die dem ersten Medienpräsentationsbeschreibungselement entspricht, wobei die Zeitfensteranzeige verwendet wird, um den Client anzuweisen, einen aktualisierten Inhalt der aggregierten Medienpräsentationsbeschreibung von einem Dienstende in einem durch die Zeitfensteranzeige angezeigten Zeitfenster zu beziehen, und der aktualisierte Inhalt das erste Medienpräsentationsbeschreibungselement umfasst.

8. Client (700), umfassend:
eine erste Bezugseinheit (710), die konfiguriert ist, um eine
Medienpräsentationsbeschreibung einer ersten Medienpräsentation zu beziehen, wobei die erste Medienpräsentation ein Inhaltselement umfasst, wobei die Medienpräsentationsbeschreibung eine Beschreibung des Inhaltselements umfasst oder die Medienpräsentationsbeschreibung Zeigeinformationen über eine Beschreibung des Inhaltselements umfasst, wobei die Beschreibung des Inhaltselements verwendet wird, um anzuzeigen, dass das Inhaltselement aus einer zweiten Medienpräsentation stammt, und wobei die erste Medienpräsentation und die zweite Medienpräsentation unterschiedliche Medienpräsentationen sind;
eine zweite Bezugseinheit (720), die konfiguriert ist, um das Inhaltselement gemäß der Beschreibung des Inhaltselements zu beziehen; und
eine Wiedergabeeinheit (730), die zum Wiedergeben des Inhaltselements konfiguriert ist;
wobei die Beschreibung des Inhaltselements ferner verwendet wird, um anzuzeigen, dass ein Teil oder die Gesamtheit des Inhaltselements in die erste Medienpräsentation eingebettet ist, **dadurch gekennzeichnet, dass**, wenn die Beschreibung des Inhaltselements ferner verwendet wird, um anzuzeigen, dass ein Teil des Inhaltselements in die erste Medienpräsentation eingebettet ist, die Beschreibung des Inhaltselements ferner verwendet wird, um eine Startwiedergabezeitposition und/oder eine Endwiedergabezeitposition des Teils des Inhaltselements anzuzeigen;
wobei die Beschreibung des Inhaltselements eine Versatzanzeige fz umfasst, und die Versatzanzeige fz verwendet wird, um einen Versatz zwischen einer Startwiedergabezeitposition und einer Startinhaltzeitposition des Inhaltselements anzuzeigen;
wobei, wenn die zweite Medienpräsentation eine Echtzeit-Medienpräsentation ist und der durch die Versatzanzeige fz angezeigte Versatz gleich 0 ist, dies anzeigt, dass das Inhaltselement damit startet, von einer Inhaltsposition abgespielt zu werden, die einer aktuellen Zeit entspricht; oder wenn die zweite Medienpräsentation eine Echtzeit-Medienpräsentation ist und der durch die Versatzanzeige fz angezeigte Versatz ungleich 0 ist, dies anzeigt, dass das Inhaltselement damit startet, ab einer Inhaltsposition abgespielt zu werden, die einer aktuellen Zeit entspricht, die durch den Versatz zurückgesetzt ist; oder wenn die zweite Medienpräsentation eine Echtzeit-Medienpräsentation ist und der durch die Versatzanzeige fz angezeigte Versatz ungleich 0 ist, dies anzeigt, dass das Inhaltselement damit startet, ab einer Inhaltsposition abgespielt zu werden, die der Startinhaltsposition von dem Inhaltselement, das durch den Versatz nach hinten versetzt ist, entspricht.

9. Client (700) nach Anspruch 8, wobei die Beschreibung des Inhaltselements ferner verwendet wird, um anzuzeigen, dass die zweite Medienpräsentation eine Echtzeit-Medienpräsentation oder eine Nicht-Echtzeit-Medienpräsentation ist.

10. Client (700) nach Anspruch 8 oder 9, wobei die Beschreibung des Inhaltselements ferner verwendet wird, um eine Zeitposition des Inhaltselements anzuzeigen, das in die erste Medienpräsentation eingebettet ist.

## Revendications

1. Procédé d'agrégation d'éléments de contenu, comprenant :
l'obtention (S301), par un client, d'une description de présentation multimédia d'une première présentation multimédia, la première présentation multimédia comprenant un élément de contenu, la description de présentation multimédia comprenant une description de l'élément de contenu ou la description de présentation multimédia comprenant des informations de pointage concernant une description de l'élément de contenu, la description de l'élément de contenu étant utilisée pour indiquer que l'élément de contenu provient d'une seconde présentation multimédia, et la première présentation multimédia et la seconde présentation multimédia sont des présentations multimédia différentes ; et l'obtention (S302) par le client de l'élément de contenu selon la description de l'élément de contenu ; et la lecture (S303), par le client de l'élément de contenu ;
la description de l'élément de contenu est en outre utilisée pour indiquer qu'une partie ou la totalité de l'élément de contenu est intégrée dans la première présentation multimédia ;
lorsque la description de l'élément de contenu est en outre utilisée pour indiquer qu'une partie de l'élément de contenu est intégrée dans la première présentation multimédia, la description de l'élément de contenu est en outre utilisée pour indiquer une position de début de temps de lecture et/ou une position de fin de temps de lecture de la partie de l'élément de contenu ; **caractérisé en ce que** la description de l'élément de contenu comprend une indication de décalage fz, et l'indication de décalage fz est utilisée pour indiquer un décalage entre une position de début de temps de lecture et une position de début de temps de contenu de l'élément de contenu ;
lorsque la seconde présentation multimédia est une présentation multimédia en temps réel et que le décalage indiqué par l'indication de décalage fz est égal à 0, elle indique que l'élément de contenu commence à être lu à partir d'une position de contenu correspondant à un temps actuel ; ou lorsque la seconde présentation multimédia est une présentation multimédia en temps réel et que le décalage indiqué par l'indication de décalage fz n'est pas égal à 0, elle indique que l'élément de contenu commence à être lu à partir d'une position de contenu correspondant à un temps actuel qui est reculé par le décalage ; ou lorsque la seconde présentation multimédia est une présentation multimédia en temps réel et que le décalage indiqué par l'indication de décalage fz n'est pas égal à 0, elle indique que l'élément de contenu commence à être lu à partir d'une position de contenu correspondant à la position de début de contenu de l'élément de contenu qui est en décalage vers l'arrière par le décalage.

2. Procédé selon la revendication 1, dans lequel la description de l'élément de contenu est en outre utilisée pour indiquer que la seconde présentation multimédia est une présentation multimédia en temps réel ou une présentation multimédia non en temps réel.

3. Procédé selon la revendication 1 ou 2, dans lequel la description de l'élément de contenu est en outre utilisée pour indiquer une position de temps de l'élément de contenu intégré dans la première présentation multimédia.

4. Procédé selon la revendication 1, dans lequel lorsque la seconde présentation multimédia est une présentation multimédia en temps non réel et que le décalage indiqué par l'indication de décalage fz est égal à 0, elle indique que l'élément de contenu commence à être lu à partir de la position de début de contenu de l'élément de contenu ; ou lorsque la seconde présentation multimédia est une présentation multimédia en temps non réel et que le décalage indiqué par l'indication de décalage fz n'est pas égal à 0, elle indique que l'élément de contenu commence à être lu à partir d'une position de contenu correspondant à la position de début de contenu de l'élément de contenu qui est en décalage vers l'arrière par le décalage.

5. Procédé selon l'une quelconque des revendications 1 à 4, dans lequel la description de l'élément de contenu est comprise dans un descripteur de procédé d'agrégation de la description de présentation multimédia, ou les informations de pointage concernant la description de l'élément de contenu sont comprises dans un descripteur de procédé d'agrégation de la description de présentation multimédia.

6. Procédé selon l'une quelconque des revendications 1 à 4, dans lequel la première présentation multimédia est une présentation multimédia agrégée, la description de présentation multimédia est une description de présentation multimédia agrégée, la description de présentation multimédia agrégée comprend N éléments de description de présentation multimédia, N est un entier supérieur à 1 ou égal à 1, un premier élément de description de présentation multimédia est un des N éléments de description de présentation multimédia compris dans la description de présentation multimédia agrégée et la description de l'élément de contenu est comprise dans le premier élément de description de présentation multimédia ou les informations de pointage concernant la description de l'élément de contenu sont comprises dans le premier élément de description de présentation multimédia.

7. Procédé selon la revendication 6, dans lequel la description de présentation multimédia agrégée comprend en outre une indication de fenêtre de temps correspondant au premier élément de description de présentation multimédia, l'indication de fenêtre de temps est utilisée pour demander au client d'obtenir le contenu mis à jour de la description de présentation multimédia agrégée à partir d'une extrémité de service dans une fenêtre de temps indiquée par l'indication de fenêtre de temps, et le contenu mis à jour comprend le premier élément de description de présentation multimédia.

8. Client (700), comprenant :
une première unité d'obtention (710), conçue de manière à obtenir une description de présentation multimédia d'une première présentation multimédia, la première présentation multimédia comprenant un élément de contenu, la description de présentation multimédia comprenant une description de l'élément de contenu ou la description de présentation multimédia comprenant des informations de pointage concernant une description de l'élément de contenu, la description de l'élément de contenu étant utilisée pour indiquer que l'élément de contenu provient d'une seconde présentation multimédia, et la première présentation multimédia et la seconde présentation multimédia sont des présentations multimédia différentes ;
une seconde unité d'obtention (720), conçue de manière à obtenir l'élément de contenu selon la description de l'élément de contenu ; et
une unité de lecture (730), conçue de manière à lire l'élément de contenu ;
la description de l'élément de contenu est en outre utilisée pour indiquer qu'une partie ou la totalité de l'élément de contenu est intégrée dans la première présentation multimédia ;
**caractérisé en ce que**, lorsque la description de l'élément de contenu est en outre utilisée pour indiquer qu'une partie de l'élément de contenu est intégrée dans la première présentation multimédia, la description de l'élément de contenu est en outre utilisée pour indiquer une position de début de temps de lecture et/ou une position de fin de temps de lecture de la partie de l'élément de contenu ;
la description de l'élément de contenu comprend une indication de décalage fz, et l'indication de décalage fz est utilisée pour indiquer un décalage entre une position de début de temps de lecture et une position de début de temps de contenu de l'élément de contenu ;
lorsque la seconde présentation multimédia est une présentation multimédia en temps réel et que le décalage indiqué par l'indication de décalage fz est égal à 0, elle indique que l'élément de contenu commence à être lu à partir d'une position de contenu correspondant à un temps actuel ; ou lorsque la seconde présentation multimédia est une présentation multimédia en temps réel et que le décalage indiqué par l'indication de décalage fz n'est pas égal à 0, elle indique que l'élément de contenu commence à être lu à partir d'une position de contenu correspondant à un temps actuel qui est reculé par le décalage ; ou lorsque la seconde présentation multimédia est une présentation multimédia en temps réel et que le décalage indiqué par l'indication de décalage fz n'est pas égal à 0, elle indique que l'élément de contenu commence à être lu à partir d'une position de contenu correspondant à la position de début de contenu de l'élément de contenu qui est en décalage vers l'arrière par le décalage.

9. Client (700) selon la revendication 8, dans lequel la description de l'élément de contenu est en outre utilisée pour indiquer que la seconde présentation multimédia est une présentation multimédia en temps réel ou une présentation multimédia en temps non réel.

10. Client (700) selon la revendication 8 ou 9, dans lequel la description de l'élément de contenu est en outre utilisée pour indiquer une position de temps de l'élément de contenu intégré dans la première présentation multimédia.
